(19) Europäisches Patentamt
European Patent Office
Office européen des brevets

(11) **EP 3 255 611 A1**

(12) **EUROPEAN PATENT APPLICATION**

(43) Date of publication:
**13.12.2017 Bulletin 2017/50**

(51) Int Cl.:
***G06T 17/20*** (2006.01)   ***G06F 17/50*** (2006.01)

(21) Application number: **16173542.8**

(22) Date of filing: **08.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Technische Universität München**
**80333 München (DE)**

(72) Inventors:
• **Hu, Xiangyu**
**85748 Garching (DE)**
• **Fu, Lin**
**80939 München (DE)**
• **Luhui, Han**
**80937 München (DE)**

(74) Representative: **Lucke, Andreas**
**Boehmert & Boehmert**
**Anwaltspartnerschaft mbB**
**Pettenkoferstrasse 22**
**80336 München (DE)**

(54) **METHOD AND SYSTEM FOR GENERATING A MESH**

(57)     The disclosure relates to a method for generating a mesh, wherein the method is performed by a processor of a computing device and comprises steps of: receiving a model, constructing a function representing geometric properties of the model, determining a total number of particles to be distributed on the model, distributing the particles on the model until the particles reach a final position, wherein constraints provided by the function are taken into account when distributing the particles, and triangulating the particles in the final position for generating an unstructured mesh. Further, a system for generating a mesh is disclosed. (Fig. 1)

Fig. 1

**Description**

Background

In many cases, the quality of scientific and engineering computations, such as those for thermofluid and solid-mechanics numerical simulations, medical imaging and computer modeling, computer graphics, etc. heavily relies on the quality of a mesh which partitions the computational domain. Generally, there are three types of meshes: a structured mesh, an unstructured mesh and a hybrid mesh which comprises both structured and unstructured mesh patches.

Many methods for generating an unstructured mesh are known, such as those in commercial codes. Generally, these methods suffer from two important difficulties: one is the strong dependence on manual work and the other is the lack of adaptive and smooth controlling of the isotropy and the size of the mesh elements.

The typical steps for mesh generation in the prior art commercial codes is (1) constructing the geometric model, (2) decomposing mesh sub-domains according to singularities, such as corners, edges and surfaces of the geometric model, (3) defining a mesh vertex distribution for each mesh sub-domain, (4) triangulation to produce mesh elements.

The steps (2) and (3) are by-hand and by-eye tasks, and require very good work experience. Although step (4) is automatic, it can produce low quality mesh elements, such as those with sharp corners, long aspect ratios or a non-smooth distribution of mesh sizes. For meshing with complex geometries, steps (2) and (3) become very time-consuming because the amount of mesh sub-domains can reach thousands. Furthermore, in order to achieve an acceptable mesh quality, multiple manual iterations are required for the steps (2), (3) and (4), which very often leads to very long (in the order of months) work-flow time.

A method related to the present disclosure is the particle-based approach which has been used to generate a mesh on a surface. The distribution of particles constrained on an implicitly defined surface is driven under pair-wise potentials, similar to those used in molecular dynamics simulation. The microscopic property of the pair-wise potentials leads to two critical issues. One is that it is almost impossible to estimate the total number of particles necessary and sufficient to fill the computational domain, which hence decreases the final accuracy with respect to optimal controlling of mesh isotropy and size. The other is that it is also difficult to determine the stability criteria, which usually requires an analysis on continuous approximation, on driving the particles towards a converged distribution for generating the final mesh.

Another known method is the implicit surface approach which is used for generating a mesh on a surface. A field function, such as a level set, is used to present a surface implicitly. In the above particle-based approaches, such implicit function constrains the motion of particles onto the surface. Up to now, the application of implicit functions is limited to representing surfaces.

Document US 8,970,590 B1 discloses a method for generating a finite element mesh. Data, regarding a model is received. The data is categorized in one or more geometric features of the model. The one or more geometric features are divided in surface shapes. A mesh is generated for each surface shape. The meshes are interconnected to form a mesh for the model.

Summary

It is an object to provide improved techniques for generating a mesh, in particular a mesh for scientific or industrial computing.

A method according to claim 1 and a system according to claim 12 are provided. Further embodiments are subject matter of dependent claims.

In one aspect, a method for generating a mesh is disclosed. The method is performed by a processor of a computing device and comprises steps of: receiving a model, constructing a function representing geometric properties of the model, determining a total number of particles to be distributed on the model, distributing the particles on the model until the particles reach a final position, wherein constraints provided by the function are taken into account when distributing the particles, and triangulating the particles in the final position for generating an unstructured mesh.

In another aspect, a system for generating a mesh is provided. The system comprises a processor, wherein the processor is configured to: receive a model, construct a function representing geometric properties of the model, determine a total number of particles to be distributed on the model, distribute the particles on the model until the particles reach a final position, wherein constraints provided by the function are taken into account when distributing the particles, and triangulate the particles in the final position for generating an unstructured mesh.

The final position of the particles may be an equilibrium position which is defined by an equation of state for the particles.

The method may further comprise receiving user input before the step of constructing the function, wherein the user input comprises parameters defining a quality of the mesh.

The user input may comprise a minimum mesh size, an average mesh size, a minimum angle of angles of the triangles forming the mesh, an average of the minimum angles, a percentage of triangles having a minimum angle smaller than 30°, and / or an area quality criterion. Alternatively or in addition, user input may be provided which refers to specific regions of the model. A user may provide additional information about the specific regions in order to create a finer mesh in the specific regions.

The geometric properties may comprise a surface of the model (e.g. a single surface or a plurality of surfaces), corners of the model, edges of the model and / or an interior volume of the model (e.g. a single interior volume or a plurality of interior volumes). The geometric properties may comprise more than the surface of the model, e.g. all surfaces surrounding the model may be included in the geometric properties. The interior volume of the model is also called volumetric domain. Such information allows generating a three dimensional mesh.

The function may be a field function which provides an implicit representation of the geometric properties of the model. More than one function may be used to represent the geometric properties of the model. In particular, several field functions may be provided to represent the model.

The total number of particles may be determined by an integration of the function or of the functions.

The method may further comprise generating ghost particles, wherein the particles are distributed taking interactions of the particles with the ghost particles into account.

The generated mesh may be an isotropic mesh. Alternatively, the generated mesh may be an anisotropic mesh.

The particles may be distributed according to particle hydrodynamics. The particles may be sampled and distributed on the model (e.g. on corners, edges, surfaces and / or volumetric domains) according to a particle-hydrodynamics based numerical simulation. The particle-hydrodynamics based numerical simulation may be specified by solving hydrodynamics equations for the particles. The particles may either move freely under an action of an interparticle force and / or may be constrained by the geometry of the model. Local properties of the particles, which may be defined by the function(s) based on the coordinates of the particles, may be determined from the implicit fields. Stability criteria for distributing the particles may be derived by an analysis for a particle-hydrodynamics simulation.

The generated mesh may comprise mesh elements, e.g. triangles. A size and / or a level of isotropy of the mesh elements may be determined from the function(s).

The method allows creating a high-quality unstructured mesh automatically from the model, e.g. a digital geometric model. Independently of the complexity of the model, a user may only need to provide limited parameters to control, for example, the isotropy and size-distribution of the mesh.

Further, the method allows controlling the isotropy of the mesh elements flexibly and accurately. One scenario may be generating an isotropic mesh, which is characterized by "almost equilateral triangles", to guarantee high-order convergence of the computations. Another scenario may be generating an isotropic-fitting mesh in which the isotropy varies according to the geometric features of the computational domain.

The method also allows controlling the distribution of the size of mesh elements smoothly and accurately. In order to maximize the computational efficiency, the size of mesh elements may be tuned to meet the necessary and sufficient local computation accuracy in the regions of interest.

Moreover, the method allows overcoming the difficulties of the particle-based approach of the prior art. The total number of particles which are necessary and sufficient to fulfill the computational domain may be determined. Further, stability criteria on driving the particles towards a converged distribution for generating the mesh may be determined.

An advantage of the present disclosure compared to the implicit surface approach is that, in one embodiment, field functions are used to represent the model, including geometric features, of the computational domain implicitly. Such field functions may be used for both the isotropy and the size optimization in the automatic mesh-generation process.

After the mesh is generated it may be outputted by the computing device, e.g. in form of a file, on a screen and / or via a printing device.

The method needs only information about the model as input. In addition, user input regarding the quality of the mesh and / or specific regions of the model may be provided. The other steps of the method, including constructing the function(s), determining the total number of particles, distributing the particles and triangulating the particles may be performed automatically without user input.

The method is executed by a computing device. The computing device may comprise one or more processors. Further, the computing device may comprise memory, e.g. transitory memory like RAM and / or non-transitory memory like a hard disk or flash memory. An output device may be connected to the computing device, for example a screen or a printer. The computing device may further comprise an input device, e.g. a keyboard, a mouse and / or a touch sensitive screen. The computing device may comprise communication means, such as a LAN device, a WLAN device, a Bluetooth device and / or a USB device.

The features disclosed herein in context with the method can be applied to the system and vice versa.

**EP 3 255 611 A1**

Description of exemplary embodiments

Following, exemplary embodiments are disclosed with reference to the following description and accompanying drawings.

Fig. 1    is a schematic block diagram of the procedures for creating the mesh.

Fig. 2    shows a sketch of the target function definitions. The upper left panel denotes the geometry interface while the upper right panel denotes the smooth level set $\phi$ function on multi-resolution based adaptive mesh. Then $\psi$ function in the narrow band is shown in the bottom left panel and the diffused $S_\kappa$ is illustrated in the bottom right panel.

Fig. 3    is a schematic block diagram of the particle-distribution procedure.

Fig. 4    shows a multi-resolution based nested hierarchical data structure in two dimensions. The solid circular line represents the geometry surface.

Fig. 5    shows a sketch of the extended computational domain wrapping the geometry surface (top) and the Eulerian discretization on the mesh cells (bottom) in a two- dimensional case.

Fig. 6    shows a sketch of sampled and remapped surface particles based on the cut-cells C (top) and the boundary condition implementation (bottom).

Fig. 7    shows a sketch of a local Voronoi graph and its dual topology for a general particle (left), an irregular triangle near boundary (middle) and a boundary particle imposing a symmetric condition (right).

Fig. 8    shows a sketch of an angle distribution histogram for an outside and an inside disk mesh generation. The x-axis represents the angle interval and the y-axis represents the percentage of an angle in the specific interval.

Fig. 9    shows a sketch of a particle simulation and a generated mesh outside the disk. Top: initial particle distribution (left), particle distribution in one snapshot (middle) and convergent particle distribution (right). Bottom: the constructed mesh (left) and two zoom-in views in terms of corners (middle and right).

Fig. 10    shows a sketch of a particle simulation and a generated mesh inside the disk. Top: initial particle distribution (left), particle distribution in one snapshot (middle) and convergent particle distribution (right). Bottom: the constructed mesh (left) and two zoom-in views in terms of the corners (middle and right).

Fig. 11    shows a sketch of the target function definitions. The upper left panel denotes the geometry interface while the upper right panel denotes the mesh generation region on a multi-resolution based adaptive mesh. The $\psi$ function in the narrow band is shown in the bottom left panel and the diffused effective curvature parameter $S_\kappa$ is illustrated in the bottom right panel.

Fig. 12    shows a sketch of an angle distribution histogram for the complex gear mesh generation. The x-axis represents the angle interval and the y-axis represents the percentage of an angle in the specific interval.

Fig. 13    shows a sketch of a particle simulation for the initial setting as in case 1 in Table 2. Top: initial particle distribution (left), particle distribution in one snapshot (middle) and convergent particle distribution (right). Bottom: three zoom-in views after convergence.

Fig. 14    shows a sketch of a generated mesh for a complex gear geometry. From the top to bottom: with the initial setting as in cases 1, 2 and 3 in Table 2. From the left to right: the overall triangulation and two zoom-in views.

Fig. 15    shows a sketch of an angle distribution histogram for the geometry with circles. The x-axis represents the angle interval and the y-axis represents the percentage of an angle in the specific interval.

Fig. 16    shows a sketch of a particle simulation for the initial setting as in case 1 in Table 3 and the generated mesh. Top: convergent particle distribution (left) and two zoom-in views (middle and right). Bottom: the overall view (left) and two zoom-in views of the mesh (middle and right).

Fig. 17    shows a sketch of a particle simulation for the initial setting as in case 2 in Table 3 and the generated mesh. Top: the diffused effective curvature parameter distribution (left), convergent particle distribution (middle) and the surface particle distribution (right). Bottom: the overall view (left) and two zoom-in views of the mesh (middle and right).

Fig. 18    shows a sketch of ellipsoid unit in the kernel-coordinate frame and the real-physical frame (top), and a sketch of particle quantity sampling (bottom).

Fig. 19    shows a sketch of a particle penetration from the positive phase into the negative phase (left) and a sketch of the ghost surface particle method (right).

Fig. 20    shows mesh details from the present method (left) and from the optimization of the open source library MMG2D (right).

Fig. 21    shows sketches of a quality histogram (top) and an angle histogram (bottom) for some of the cases summarized in Table 4.

Fig. 22    shows a sketch of the particle distribution and the generated mesh for some of the cases of Table 4. Left:

case 1, middle: case 2, and right: case 3. From top to bottom: the zoom-in view of particle distribution, the overall view of the generated mesh and the corresponding zoom-in view.

Fig. 23    shows a sketch of the mesh quality statistics versus averaged neighbor particle number for case 2 of Table 4.

Fig. 24    shows a sketch of mesh quality statistics for the circle geometry of the cases of Table 5. Top: the distribution of the computed quality criterion G. Bottom: the angle histogram of the triangles in the metric space.

Fig. 25    shows a sketch of mesh quality statistics for the square geometry of the cases of Table 5. Top: the distribution of the computed quality criterion G. Bottom: the angle histogram of the triangles in the metric space.

Fig. 26    shows a sketch of the particle distribution and the generated mesh for the circle geometry of Table 5. Left: case 1, middle: case 2, and right: case 3. From top to bottom: the zoom-in view of the particle distribution, the overall view of the generated mesh and the corresponding zoom-in view.

Fig. 27    shows a sketch of the particle distribution and the generated mesh for the square geometry of Table 5. Left: case 1, middle: case 2, and right: case 3. From top to bottom: the zoom-in view of the particle distribution, the overall view of the generated mesh and the corresponding zoom-in view.

Fig. 28    shows a sketch of the quality statistics corresponding to the first three cases in Table 6. The top panel denotes the triangle quality histogram in the metric space and the bottom panel denotes the angle histogram of the generated triangles.

Fig. 29    shows a sketch of the generated anisotropic meshes corresponding to the three cases in Table 6. Top: overall views; bottom: zoom-in views.

Fig. 30    shows a sketch of the particle smoothing domain for case 2 in Table 6. The overall view (left) and the zoom-in view (right).

## First embodiment

Mesh generation is usually based on a model object whose geometry can be represented explicitly, say in STL (stereolithography) format or implicitly, say by one or more field functions. The volumetric domains of the model or its surfaces can be used to define the computational domain according to the specific application of scientific and engineering computations. Most models contain the common geometric features represented by singularities, i.e. corners, edges and surfaces, and continuous volumetric domains separated by them.

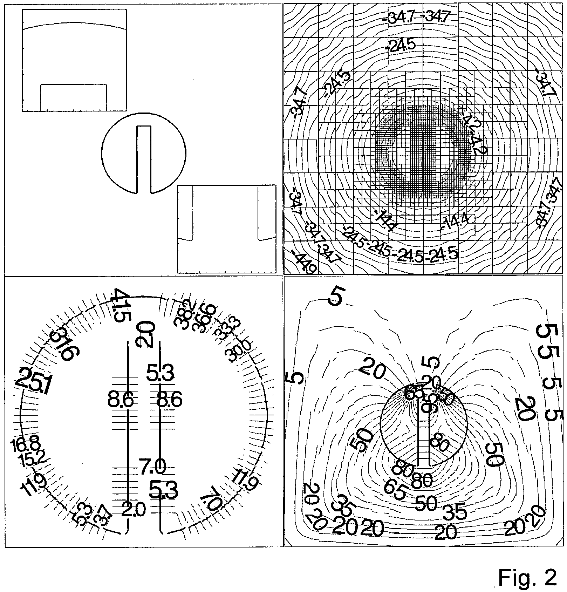

A two-dimensional embodiment of the model and a computational domain is given in the upper-left panel of Fig. 2. Note that there are four corners and one edge separating the computational domain into inner and outer sub-domains.

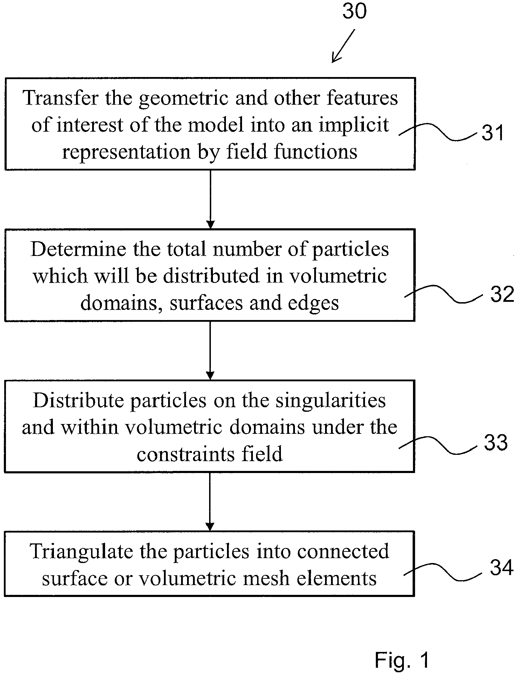

Referring to Fig. 1, the procedures 30 of the method for creating the mesh may generally include a step 31 for transferring the geometric features of the model into an implicit representation by field function(s), a step 32 for determining the total number of particles which may be distributed in the volumetric domains, surfaces and edges, a step 33 for distributing the particles on the singularities and within the volumetric domains based on a smoothed-particle based simulation under the constrains of the field function(s), and a step 34 for triangulating the particles into connected surface or volumetric mesh elements. All these steps are automatic. Independently of the complexity of the model, the user only needs to provide a limited number of global parameters to control the isotropy and the size-distribution of the final mesh.

An embodiment of the first step uses a generalized level-set function on a structured grid

$$\Phi = \Phi(C, \phi_I, \phi_E, \phi_P, S_1, \ldots, S_k, \ldots, S_K) \quad (1)$$

to define the field functions within the computational domain. Here, $C$ is an integer color function representing a volumetric domain the grid cell belongs to, $\phi_I, \phi_E, \phi_P$, called volumetric, surface and edge level-set functions, respectively, are the distances from the grid cell to the nearest surface, nearest edge and nearest corner, respectively. $S_k = S_k(\phi_I, \phi_E, \phi_P)$ is a scalar function depending on the geometric (and other) features. We classify a grid cell as an interface cell if not all of its direct neighboring cells are in the same color. Note that the values of $\phi_E$, $\phi_P$, and $S_k$, are only required on interface cells and the grid cells within the near interface region around the surface and the edges.

In general, $\phi_I$ at the interface cells can be computed directly by simple explicit methods. For the grid cells far away from a surface, it can be obtained by solving the reinitialization equation

$$\frac{\partial \phi_I}{\partial \tau} + |\nabla \phi_I| = 1, \quad (2)$$

where $\tau$ is a pseudo time. A similar situation applies to $\phi_E$ and $\phi_P$. The difference is that the corresponding reinitialization equation is solved by only updating the values on the interface cells, for which the values in the near interface region are obtained by solving an extension equation

$$\frac{\partial \phi_{E,P}}{\partial \tau} + \mathbf{N_I} \cdot \nabla \phi_{E,P} = 0, \quad (3)$$

where $\mathbf{N_I} = \nabla \phi_I / |\nabla \phi_I|$ is the normal direction. Usually, it is required that the scalars $S_k$ are smoothly distributed except for the values constrained at given locations. Therefore,

$$\frac{\partial S_k}{\partial \tau} = \nabla \cdot [(\mathbf{N} \cdot \nabla S_k)\mathbf{N}], \quad (4)$$

where $N = \nabla \phi_{I,E,P} / |\nabla \phi_{I,E,P}|$ is the normal direction of the respective generalized level-set functions. When Eq. (4) is solved for obtaining $\phi_E$ or $\phi_P$ on interface cells, extension equations similar to Eq. (3) will be solved to update $S_k$ in a near interface region. Also note that, for numerical stability, all above equations may be solved numerically by an upwind scheme, which computes a spatial operator by assuming that information propagates from singularities.

An embodiment of the second step uses three user defined parameters, i.e. the maximum volumetric mesh size $\Delta_{max}$, and the maximum and minimum mesh sizes, respectively, $\Delta_{max,I}$ and $\Delta_{min,I}$, in the surface tangential direction, for the generation of an isotropic mesh. The surface mean-curvature related scalar $S_\kappa$ is defined on interface cells

$$S_\kappa = \max\left[\kappa, \left(1 - \frac{\phi_E}{\phi_{\max,E}}\right)\kappa_E\right], \quad (5)$$

where $\kappa$ is the surface mean-curvature computed on the interface cells, $\kappa_E$ is the cut-off mean-curvature at the edges and $\phi_{max,E}$ is the maximum $\phi_E$. With Eq. (4), $S_\kappa$ is diffused to the entire computational domain. The target mesh size $\Delta_t$ can be proposed as

$$\Delta_t = \tilde{\Delta} + \frac{\phi_I}{\phi_{I,\max}}\left(\Delta_{\max} - \tilde{\Delta}\right), \quad (6)$$

where

$$\tilde{\Delta} = \Delta_{\min,I} + \left(1 - \frac{S_\kappa - S_{\kappa,\min}}{S_{\kappa,\max} - S_{\kappa,\min}}\right)\left(\Delta_{\max,I} - \Delta_{\min,I}\right). \quad (7)$$

Then, the target mesh density function is defined as

$$\rho_t = \Delta_t^{-d}, \quad (8)$$

where d = 2 or 3 is the spatial dimension.

A two-dimensional embodiment of the generalized level-set function is given in the upper-right, lower-left and lower-right panels of Fig. 2. The upper-left panel shows that the model, a circle with a narrow slot, is located in the center of a square and separates the inner and outside volumetric domains. The upper-right panel gives the field of $\phi_I$, the lower-left panel the field of $S_\kappa$ on the interface cells and near the interface region, and the lower-right panel the field of $S_\kappa$ in the entire computational domain.

Another embodiment of the second step uses four user defined parameters, i.e. the maximum volumetric mesh size $\Delta_{max}$, the maximum and minimum mesh sizes $\Delta_{max,I}$ and $\Delta_{min,I}$ in the surface tangential direction, respectively, and the minimum size $\Delta_{min,N}$ in the surface normal direction, for the generation of an anisotropic mesh. The surface mean-curvature related scalar $S_\kappa$ is computed by Eqs. (5) and (4). The target mesh sizes $\Delta_{l,t}$ and $\Delta_{N,t}$ can be proposed as

$$\Delta_{I,t} = \tilde{\Delta} + \frac{\phi_I}{\phi_{I,\max}}\left(\Delta_{\max} - \tilde{\Delta}\right), \quad \text{and} \quad \Delta_{N,t} = \Delta_{\min,N} + \frac{\phi_I}{\phi_{I,\max}}\left(\Delta_{\max} - \tilde{\Delta}\right), \quad (9)$$

where $\tilde{\Delta}$ is defined as in Eq. (7). Then, the target mesh density $\rho_t$ and strech ratio $s$ are defined, respectively, as

$$\rho_t = \Delta_{N,t}^{-1}\Delta_{I,t}^{1-d}, \quad \text{and} \quad s = \frac{\Delta_{I,t}}{\Delta_{N,t}}. \quad (10)$$

With the target mesh density function, the total mass involved in a volumetric domain for mesh generation can be obtained by the integral

$$M_{V_C} = \int_\Omega \rho_t H(C)dV, \quad (11)$$

where $\Omega$ is the entire domain, and the Heaviside function $H(C)$ is unity if the volumetric domain is within the computational domain, otherwise zero. Similarly, the total mass constrained on a surface patch can be obtained by the integral

$$M_{I_{kl}} = \int_\Omega \rho_t \delta(C_k, C_l)dV. \quad (12)$$

The Dirac-delta function $\delta(C_k, C_l)$ is defined on the surface patch and separates the volumetric domains of colors $C_k$ and $C_l$, respectively.
An embodiment of the second step predicts the total number of particles necessary to fill the computational domain by

$$N_V = \sum_C M_{V_C}, \quad (13)$$

by assuming that each particle has the same unity mass. Similarly, the total number of particles to fill the surfaces is predicted as

$$N_I = \sum_{k \neq l} M_{I_{kl}}. \quad (14)$$

An embodiment of the third step distributes the particles by smoothed-particle based simulation using smoothed particle hydrodynamics (SPH) method, which uses a e.g. Gaussian-like kernel function $W(\mathbf{r}\text{-}\mathbf{r}_i, h)$, where $h$ is a smoothing length to calculate the inter-particle force. The kernel function has the properties $\int W(\mathbf{r}\text{-}\mathbf{r}_i, h)d\mathbf{r} = 1$, $\int \nabla W(\mathbf{r}\text{-}\mathbf{r}_i)d\mathbf{r} = 0$, and $\lim_{h \to 0} W(\mathbf{r}\text{-}\mathbf{r}_i, h) = \delta(\mathbf{r}\text{-}\mathbf{r}_i)$. The kernel function used for the generation of the isotropic mesh is radial symmetric and has the form $W(|\mathbf{r}\text{-}\mathbf{r}_i|, h)$. The kernel function used for the generation of the anisotropic mesh has the form $W(|\mathbf{G}\cdot(\mathbf{r}\text{-}\mathbf{r}_i)|, h)$. The transformation tensor is given by

$$\mathbf{G} = \mathbf{T}_r^{k \to r} \mathbf{I} \Delta \mathbf{T}_r^{r \to k}, \quad (15)$$

where $\Delta = \left(\Delta_{N,t}^{-1}, \Delta_{I,t}^{-1}, \Delta_{I,t}^{-1}\right)$ and $\mathbf{T}_r^{k \to r}$ and $\mathbf{T}_r^{r \to k}$ are forward and backward rotational transformation tensors.
The density and pressure of a particle are

$$\rho_i = \sum_j \widehat{W}(\mathbf{r}_{ij}), \quad \text{and} \quad p_i = p_0 \frac{\rho_i^2}{\rho_{i,t}^2}, \quad (16)$$

where $\mathbf{r}_{ij} = \mathbf{r}_i - \mathbf{r}_j$, $p_0$ is a parameter and $\rho_{i,t} = \rho_t(\mathbf{r}_i)$ is the mesh density interpolated at the particle position. Here, the smoothing length $\widehat{W}(\mathbf{r}_{ij}) = [W(\mathbf{r}_{ij},h_i) + W(\mathbf{r}_{ij},h_j)]/2$, where $h_i = \Delta_t(\mathbf{r}_{ij})$ or $\Delta_{N,t}(\mathbf{r}_{ij})$ is the target mesh size interpolated at the particle position. Following a standard SPH formulation, the acceleration of a particle due to pressure gradient can be written as

$$\mathbf{a}_i = \sum_j \left( \frac{p_i}{\rho_i^2} + \frac{p_j}{\rho_j^2} \right) \nabla \widehat{W}(\mathbf{r}_{ij}) = \sum_j \left( \frac{p_0}{\rho_{i,t}^2} + \frac{p_0}{\rho_{j,t}^2} \right) \nabla \widehat{W}(\mathbf{r}_{ij}), \quad (17)$$

where $\nabla \widehat{W}(\mathbf{r}_{ij}) = [\nabla W(\mathbf{r}_{ij},h_i) + \nabla W(\mathbf{r}_{ij},h_j)]/2$. Note that Eq. (17) implies that when the particle density is the same as the background mesh density, the pressure force acting on a particle vanishes. If this condition is satisfied for every particle, the particle distribution is in equilibrium.

The point positions of the particles in equilibrium distribution will be used for the fourth step which creates connected surface or volumetric mesh elements by standard triangulating approaches.

In order to achieve a stable distribution of the particles, a viscous force is introduced for damping the particle motion. The acceleration of a particle due to viscosity is

$$\bar{\mathbf{a}}_i = \sum_j \frac{2n_i n_j}{n_i + n_j} \frac{\mathbf{v}_{ij}}{r_{ij}} \left( \frac{1}{\rho_{i,t}^2} + \frac{1}{\rho_{j,t}^2} \right) \nabla W(\mathbf{r}_{ij}) \cdot \mathbf{e}_{ij} \quad (18)$$

where the dynamic viscosity $\eta = \rho_t \nu$, where $\nu = 0.1|\mathbf{v}|$, $\mathbf{r}_{ij} = r_{ij}\mathbf{e}_{ij}$ and $\mathbf{v}_{ij} = \mathbf{v}_i - \mathbf{v}_j$, where $\mathbf{v}_i$ is a particle velocity.

In order to constrain the particles on surface or edge singularities, they only interact with their neighboring particles on the singularity. When implementing Eq. (17), their resulting accelerations are projected onto the tangential direction along the singularity, and their positions are projected onto the singularity.

There are three types of particles according to initialization and constraint: one is volumetric particles initially sampled in the volumetric domain; one is surface or edge particles initially sampled in interface cells, the other is fixed corner particles.

An embodiment of the time-stepping algorithm is given by

$$\tilde{\mathbf{v}}_i^{n+\frac{1}{2}} = \frac{1}{2} \mathbf{a}_i^n \Delta t,$$

$$\mathbf{v}_i^{n+\frac{1}{2}} = \tilde{\mathbf{v}}_i^{n+\frac{1}{2}} + \frac{1}{2} \tilde{\mathbf{a}}_i^{n+\frac{1}{2}} \Delta t, \quad (19)$$

$$\mathbf{r}_i^{n+1} = \mathbf{r}_i^n + \mathbf{v}_i^{n+\frac{1}{2}} \Delta t.$$

Considering numerical stability, the time-step $\Delta_t$ is constrained by the same limits as for standard SPH, such as

$$\Delta t \leq 0.25 \left( \frac{\Delta}{|\mathbf{a}|} \right)_{\max}^{\frac{1}{2}}, \quad (20)$$

which implies that the maximum displacement of a particle after one time-step is only a fraction of the local target mesh size.

Boundary conditions are required during distributing the particles with solving the SPH equations. An embodiment of the boundary conditions avoids the penetration of particles through the surfaces, especially when generating a highly anisotropic mesh. In this embodiment, isotropic ghost surface particles with a minimum smoothing length are distributed on the surface. When the force from a surface particle to a volumetric particle is calculated, only the force in the surface tangential direction is taken into account. The force along the surface normal direction is contributed by the ghost surface particles.

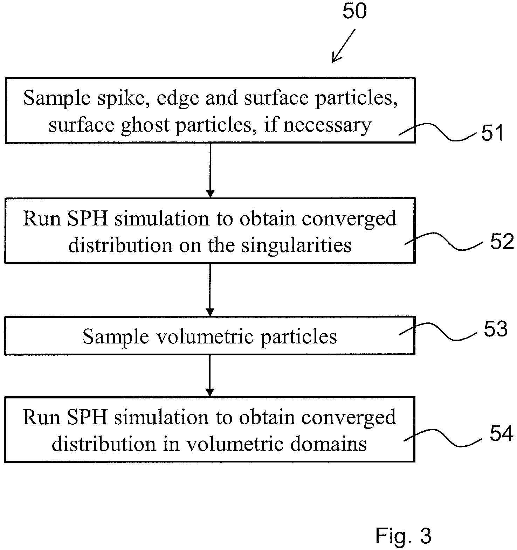

Referring to Fig. 3, an embodiment of the procedures 50 on distributing the particles includes a step 51 of sampling corner, edge and surface particles, surface ghost particles if necessary, a step 52 on the SPH simulation to obtain a converged particle distribution on the singularities, a step 53 of sampling the volumetric particles, and a step 53 of a SPH simulation to obtain a converged particle distribution in the volumetric domains.

For an isotropic mesh, the quality of the mesh elements (triangles) can be measured by the parameters $G_{min}$, $G_{avg}$, $\theta_{min}$, $\theta_{avg}$, $\%_{<30°}$. Here, $G \leq 1$ is defined as $2\sqrt{3}\frac{S}{ph}$, where S is the triangle area, $p$ is the half-perimeter, and $h$ is the length of longest edge. $G_{min}$, $G_{avg}$ represent the minimum and average mesh quality, respectively. $\theta_{min} \leq 60°$ is the minimum angle of smallest angles of all triangles, and $\theta_{avg}$ denotes the average of the minimum angles. $\%_{<30°}$ represents the percentage of triangles whose smallest angle is less than 30°. Before the quality of the anisotropic mesh elements (triangles) can be evaluated by the same way as for the isotropic mesh, a coordinate transformation

$$\mathbf{r}'_i = I\Delta \mathbf{T}_r^{r\to k}(\mathbf{r}_i - \mathbf{r}_c), \quad (21)$$

where $r_c$ is the mass center of the triangle, is carried out for all the vertices of each triangle.

Second embodiment - generation of an adaptive isotropic mesh

Firstly, we briefly review the level-set concept in the geometry surface definition and the multi-resolution representation of the computational domain according to the geometry surface position.

The level-set method is employed to describe the geometry surface. The geometry surface can be represented by the zero isocontour of a signed-distance function as

$$\Gamma = \{(x,y)|\phi(x,y,t) = 0\}. \quad (2.1)$$

While the computational interior domain, i.e. the mesh generation region, is recorded as positive phase $\phi > 0$, the inner solid region is marked as a negative phase with $\phi < 0$. The surface geometrical properties, e.g. the normal direction **N** $= [n_x, n_y]^T$ and mean curvature $\kappa$, can be straightforwardly calculated by

$$\mathbf{N} = \frac{\nabla\phi}{|\nabla\phi|}, \quad \text{and} \quad \kappa = \nabla \cdot \frac{\nabla\phi}{|\nabla\phi|}. \quad (2.2)$$

The mean curvature $\kappa$ is valid only on the smooth resolved geometry surface. For the singularities, e.g. sharp corners or under-resolved region, the $\kappa$ computation is inaccurate. One remedy is to significantly increase the mesh resolution so that the discretization error is insignificant.

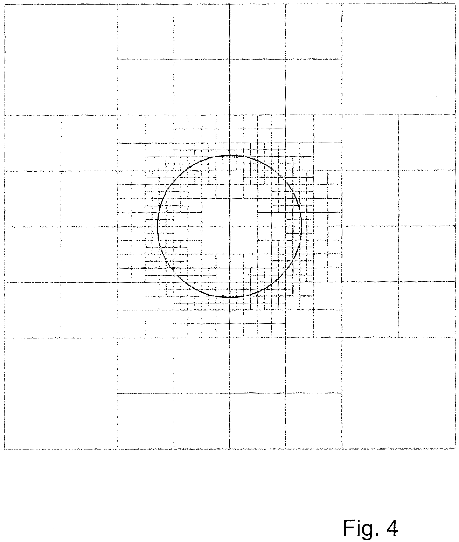

In order to discretize the level-set function, a multi-resolution based nested hierarchical data structure is established, see e.g. Fig. 4. The adaptation unit is a grid block rather than mesh cells. Each grid block unit is equipped with a predefined number of cells, including auxiliary boundary ghost cells for numerical interpolation. This multi-resolution representation of the computational domain according to the geometry surface position can be efficiently initialized by the nested hierarchical data structure and a simple tag system. Based on this data structure, the cut cells can be identified and marked explicitly by checking whether the level set function changes its sign across the cell. Alternatively, the cut cells

$$C = \{C_{i,j}|0 < \alpha_{i,j} < 1.0\}, \quad (2.3)$$

where $\alpha_{i,j}$ denotes the volume fraction, can be defined and marked explicitly. When solving a Partial Differential Equation (PDE) on this adaptive mesh, the basic numerical difficulty is how to define the ghost cell values when resolution jumps occur among adjacent blocks. Considering the one-dimensional case, the projection operator

$$P_{l+1\rightarrow l}: \quad f_{l,i} = \frac{1}{2}\left(f_{l+1,2i}\right) \quad (2.4)$$

is first performed from the finest level to the coarsest level recursively. Then a prediction operator

$$P_{l+1\rightarrow l}: \begin{cases} f_{l+1,2i} = f_{l,i} + \sum_{k=1}^{m} \gamma_k(f_{l,i+k} + f_{l,i-k}) \\ f_{l+1,2i+1} = f_{l,i} - \sum_{k=1}^{m} \gamma_k(f_{l,i+k} + f_{l,i-k}) \end{cases} \quad (2.5)$$

is employed from the coarsest level to the finest level recursively to fill the corresponding ghost cell values for certain blocks sharing no neighbors on the same level. Different choices of coefficients $\gamma_k$ correspond to different interpolation order.

With these two operations, the PDEs can be solved on the adaptive mesh just the same way as on the uniform mesh. Meanwhile, both the computational costs and the memory consumptions are significantly reduced so that very highly effective resolution can be achieved for an accurate description of the geometry surface.

Secondly, the definitions of target feature-size function and target density function are developed based on three characteristic parameters, which are calculated from model equations on the multi-resolution adaptive mesh, e.g.

$$\begin{cases} h_t = f(\phi, \Psi, S_\kappa), \\ \rho_t = g(\phi, \Psi, S_\kappa), \end{cases} \quad (2.6)$$

wherein $S_\kappa$ is a parameter dependent on $\kappa$ at the surface, e.g. $S_\kappa = \kappa$ at the surface. Generally speaking, more parameters can be taken into account depending on specific applications.

In general, the level-set functions in the narrow-band of the geometry surface are straightforward to be defined by some explicit method. For the far field, it can be obtained by solving the reinitialization equation

$$\phi_\tau + \text{sgn}(\phi)(|\nabla\phi| - 1) = 0, \quad (2.7)$$

where $\tau$ is the pseudo time-step taken as $0.5\Delta x$. The detailed numerical algorithms dedicated to a viscous solution of this Hamilton-Jacobi equation is known in the prior art. It is noted that some other redistance methods, e.g. the Fast Marching Method, are more difficult to implement on this adaptive mesh than PDE. In order to avert the drift of the geometry surface when solving Eq. (2.7), the level-set values of cut-cells C and their nearest neighbours are fixed.

After the global level-set function is computed, the normal direction **N** in the entire computational domain and the curvature $\kappa$ on all cut-cells C can be derived by Eq. (2.2).

In order to include the effects of singularities, where the mesh is typically adaptive to the smallest scales, to the feature-size function of adjacent geometry surface, the minimum distance function $\Psi$ from the singularities are measured by solving two simultaneous equations

$$\begin{cases} \Psi_\tau + \text{sgn}(\Psi)(|\nabla\Psi| - 1 = 0, \quad (2.8) \\ \Psi_\tau \pm \mathbf{N} \cdot \nabla\Psi = 0, \quad (2.9) \end{cases}$$

constrained on the geometry surface. For Eq. (2.9), +N is used to extend $\Psi$ from sub-domain of $\phi < 0$ to sub-domain of $\phi > 0$ while **-N** is utilized along the opposite direction. To simplify the notation, the mesh cells containing singularities are called characteristic cells $C_s \subset C$.

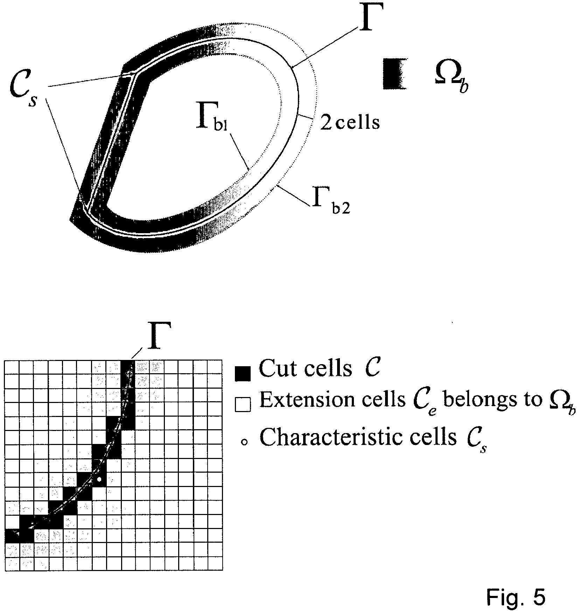

As shown in Fig. 5, an extended computational domain $\Omega_b$ wrapping the geometry surface $\Gamma$ with a two-cell width is defined. When solving Eq. (2.8) and Eq. (2.9), the $\Psi$ values of characteristic cells $C_s$ are fixed as zero. By the extension formulation Eq. (2.9), the gradient in the normal direction satisfies $\frac{\partial\Psi}{\partial n} = 0$. Typically, five iterations are enough towards a convergence of solving Eq. (2.9) while the iteration number depends on the geometry topology in terms of Eq. (2.8). The detailed algorithm is described in Algorithm 1.

Algorithm 1 - computation of $\Psi$:

```
1: initialize Ψ values of all cells in the extension domain Ω_b;
2: while Ψ of cells C_{i,j} ∈ C are not convergent do
3: while Ψ of cells C_{i,j} ∈ C_e are not convergent do
4: fix Ψ of all cells C_{i,j} ∈ C;
5: update Ψ of the cells Ci_{j} ∈ C_e by solving the extension Eq. (2.9);
6: end while
7: reset and fix Ψ of cells C_{i,j} ∈ C_s as zero;
8: update Ψ of the cells C_{i,j} ∈ C ∩ C_{i,j} ∉ C_s by solving the reinitialization equation Eq. (2.8);
9: end while
```

Since only the calculation of mean curvature $\kappa$ on or close to the geometry surface is valid, a model equation

$$\frac{\partial S_\kappa}{\partial \tau} = \nabla \cdot \left( (\mathbf{N} \cdot \nabla S_\kappa) \mathbf{N} \right) \quad (2.10)$$

is proposed to compute the $S_\kappa$ interior the computational domain. The idea is that the influence of geometry surface curvature on the mesh feature-size function decays in the normal direction.

To solve this PDE, the $S_\kappa$ of all cut-cells belonging to C is fixed as an inner boundary condition. On the other hand, the $S_\kappa$ on the outer boundary of computational domain is fixed as zero assuming a far field condition. For numerical stability, the pseudo time-step is taken as $0.5\Delta x^2$.

Here, four user-defined scales are assumed as the input, i.e. a globally maximum mesh size $h_{max}$, a maximum size $h_{max,t}$ on the geometry surface, a minimum size $h_{min,t}$ on the geometry surface and a mean curvature $\kappa_a$ at singularities.

In order to take into account the effects of singularities, the $S_\kappa$ values of the cut-cells C, i.e. on the geometry surface, first are redefined by

$$S_\kappa = \max\left( \kappa, \left( 1 - \frac{\Psi}{\Psi_{max}} \right) \kappa_a \right). \quad (2.11)$$

Then, this information is diffused into the computational domain by solving Eq. (2.10). The target feature-size function can be defined

$$\begin{cases} h = h_{min,t} + \left( 1 - \dfrac{\kappa - \kappa_{min}}{\kappa_{max} - \kappa_{min}} \right) \left( h_{max,t} - h_{min,t} \right), \\ h_t = h + \dfrac{\phi}{\phi_{max}} \left( h_{max} - h \right), \end{cases} \quad (2.12)$$

in the entire computational domain. The target density function is derived according to:

$$\rho_t = \begin{cases} \dfrac{1}{h_t}, & 1D, \\ \dfrac{1}{h_t^2}, & 2D, \\ \dfrac{1}{h_t^3}, & 3D. \end{cases} \quad (2.13)$$

With this globally smooth target density function, the total mass involved in the positive-phase domain, i.e. the mesh generation region, can be derived by the integral

$$M_p = \int_\Omega \rho_t \Delta dv, \quad (2.14)$$

where

$$\Delta = \begin{cases} 1, & \text{if } \phi > 0, \\ 0, & \text{otherwise.} \end{cases} \quad (2.15)$$

Similarly, the total mass constrained on the geometry surface is derived by

$$M_{p,s} = \int_{\partial\Omega} \rho_t ds. \quad (2.16)$$

Algorithm 2 - Target feature-size function and density function definition:

1: initialize the multi-resolution based nested hierarchical data structure according to the geometry surface;
2: compute globally smooth signed-distance function by solving Eq. (2.7);
3: compute the normal direction **N** in the entire computational domain and the curvature $\kappa$ on all cut-cells C by Eq. (2.2);
4: measure the minimum distance function $\Psi$ from singularities by solving Eq. (2.8) and Eq. (2.9) simultaneously using Algorithm 1;
5: redefine the curvature on the geometry surface, i.e. in cut-cells C, by Eq. (2.11);
6: calculate the globally effective curvature parameter $S_\kappa$ by solving Eq. (2.10);
7: compute the target feature-size function by Eq. (2.12);
8: define the target density function by Eq. (2.13);
9: integrate the total mass in the positive-phase domain by Eq. (2.14) and the mass constrained on the geometry surface by Eq. (2.16).

Thirdly, a set of model equations is proposed. Then, the corresponding SPH algorithm, including kernel function without pairing instabilities, initial condition, boundary condition and fast neighbor search are discussed. The flowchart of adaptive smoothing length SPH simulation is summarized at last.

For compressible flow, the Lagrangian form of the governing equations is

$$\frac{d\rho}{dt} = -\rho \nabla \cdot \mathbf{v}, \quad (2.17)$$

$$\frac{d\mathbf{v}}{dt} = -\mathbf{F_p} + \mathbf{F_v} + \mathbf{F_f}, \quad (2.18)$$

where $\rho$ is fluid density, **v** is velocity vector, and **Fp**, **F$_v$**, **F$_f$** stand for the accelerations due to repulsive pressure force, viscous shear force and friction force, respectively. This set of equations can be solved by adaptive smoothing length SPH since the inherent properties, e.g. smooth and isotropic, are in line with the requirements of unstructured mesh generation.

Hereafter, all particles are supposed to possess the same mass as

$$m = 1 \quad (2.19)$$

for the simplification of further derivation.

In general, particle density is calculated from the summation overall neighbor particles algebraically rather than solving the continuity equation Eq. (2.17). Following the definition of $d_i = \sum_j W_{ij}$ which is approximately the inverse of specific particle volume, the particle average density is $m_i d_i$ and can be evaluated as

$$\rho_i = m_i \sum_j W(r_{ij}, h), \quad (2.20)$$

where $\mathbf{r}_{ij} = \mathbf{r}_i - \mathbf{r}_j, r_{ij} = |\mathbf{r}_{ij}|$.

The discretization of the conservative repulsive pressure force is given as

$$\mathbf{F_p} = \sum_j m_j \left( \frac{p_i}{\rho_i^2} + \frac{p_j}{\rho_j^2} \right) \frac{\partial W(r_{ij}, h)}{\partial r_{ij}} \mathbf{e}_{ij}, \quad (2.21)$$

where $\mathbf{e}_{ij} = \frac{r_{ij}}{r_{ij}}$ is the normalized direction vector from particle $i$ to $j$. The arithmetic average of smooth lengths for a particle pair is exploited in order to enforce force anti-symmetry as

$$h = \frac{1}{2} \left( h_i + h_j \right). \quad (2.22)$$

Particularly, when smooth lengths of a particle pair are discontinuous, this average may be critical for numerical stability.

In order to close the system of governing equations, the pressure must be defined by an equation of state. For general, an incompressible SPH implementation, $p = \rho c^2$ or $p = p_0 (\frac{\rho}{\rho_0})^{\gamma} + b$ is widely used. Instead, we define the pressure as

$$p = p_0 \frac{\rho^2}{\rho_t^2}, \quad (2.23)$$

which incorporates the target density $\rho_t$. Substituting Eq. (2.23) into Eq. (2.21), we obtain

$$\mathbf{F_p} = \sum_j m_j \left( \frac{p_0}{\rho_{t,i}^2} + \frac{p_0}{\rho_{t,j}^2} \right) \frac{\partial W(r_{ij}, h)}{\partial r_{ij}} \mathbf{e}_{ij}, \quad (2.24)$$

where the SPH density term disappears and is replaced by the target density. As is well known in standard SPH methods, accurate density summation depends on sufficient number of support neighbors with respect to certain kernel function and is computationally time consuming. With the introduction of Eq. (2.23), direct density calculation is not necessary.

The particle target density is a function of its physical position

$$\rho_{t,i} = \rho_t(\mathbf{r}_i), \quad (2.25)$$

and can be directly computed from the Eulerian mesh by bilinear interpolation. Meanwhile, the particle smoothing length can be determined in a similar manner

$$h_i \approx \vartheta h_{t,i} = \vartheta h_t(\mathbf{r}_i), \quad (2.26)$$

where $\vartheta$ is a scale factor designed to adjust the average particle neighbor number and approximately is around 1.

Considering that $\mathbf{F_p} = \frac{\nabla p}{\rho}$, the repulsive force depends on density and pressure gradient in the fluid field. If the particle distribution does not coincide with the target density function, $p = p_0 \dfrac{\rho^2}{\rho_t^2}$ is not constant throughout the computational domain, particles will be driven to *Pt* move by the repulsive force produced by the pressure gradient. When the target density is achieved, the pressure gradient vanishes and thus a convergent force equilibrium solution is obtained.

In terms of the viscous model, the particle acceleration induced by the shear force is given as

$$\mathbf{F_v} = \sum_j \left( \frac{2\eta_i \eta_j}{\eta_i + \eta_j} \right) m_j \left( \frac{1}{\rho_i^2} + \frac{1}{\rho_j^2} \right) \frac{\partial W(r_{ij}, h)}{\partial r_{ij}} \frac{\mathbf{v}_{ij}}{r_{ij}}, \quad (2.27)$$

where the dynamic viscosity is $\eta = \rho \nu$, and $\mathbf{v}_{ij} = \mathbf{v}_i - \mathbf{v}_j$ is the relative velocity vector from particle *i* to particle *j*. This formula utilizes a combined viscous coefficient $\dfrac{2\eta_i \eta_j}{\eta_i + \eta_j}$ and is robust in dealing with large viscosity jumps.

The particle density is approximated as

$$\rho = \rho_t \quad (2.28)$$

for simplicity. Further, the kinematic viscosity coefficient is defined as

$$\nu = 0.1 r_c |\mathbf{v}|, \quad (2.29)$$

where $r_c$ means a particle interaction cut-off radius, assuming that the local Reynolds number is on the order of $O(10)$.

The evolution of the entire particle system is then determined by the background potential force and the viscous force. The potential force accelerates the particle to the target position whereas the viscous force damps the total kinetic energy. Mostly, viscous effects are not sufficient to damp all the particle kinetic energy, thus it is difficult for the whole particle system to converge to a steady state.

We propose a friction model supposing that the skin friction coefficient is infinite throughout the computational domain. Thus, all the particle kinetic energies will be damped to zero after each physical time step. Technically, the particle velocity is reset to zero

$$\mathbf{v}_n = \mathbf{0} \quad (2.30)$$

right after updating the particle coordinates.

Despite the fact that the family of Wendland kernel functions is demonstrated to be free from the pairing instability for all possible number of neighbors through the kernel Fourier transform analysis, the presumption is that the particle neighbor number is constant or smoothly varying. When the particle distribution is not regularized leading to particle neighbor jump, all regular bell-shaped kernel functions are inferior with respect to the force computation.

It was proposed to remove the hump region for cubic spline radically by forcing the kernel gradient constant within a region where $\dfrac{r}{h} \leq \dfrac{2}{3}$. The modified kernel, however, leads to large errors in the density evaluation because it is not well normalized under this circumstance. A hyperbolic-shaped kernel function is proposed with a non-negative second-order derivative within the entire support as

$$W(r_{ij}, h) = \alpha \begin{cases} s^3 - 6s + 6, & 0 \leq s < 1, \\ (2 - s)^3, & 1 \leq s < 2, \\ 0, & 2 \leq s, \end{cases} \quad (2.31)$$

where $S = \frac{r_{ij}}{h}$ and $\alpha$ is a normalized constant

$$\alpha = \begin{cases} \dfrac{1}{3\pi h^2}, & 2D, \\[3mm] \dfrac{15}{62\pi h^3}, & 3D. \end{cases} \qquad (2.32)$$

Since this kernel successfully avoids possible tensile instability and pairing instability while satisfying the conventional requirements of kernel function, it is by default employed for force calculations herein if not mentioned otherwise.

Each particle features an attribute function

$$\phi_i = \phi(\mathbf{r}_i), \qquad (2.33)$$

which is interpolated from the background mesh. The particles are basically classified into three categories and marked by a color function. Except that the colors of surface particles, for which the movements are constrained on the geometry surface, are determined as 0 since the initialization, the colors of other particles are adaptive to the attribute function $\phi_i$. Specifically, the particles with $\phi_i > 0$ are marked as positive-phase particles with color 1 while the others with $\phi_i < 0$ are defined as negative-phase particles with color -1. For positive-phase particles, they interact with other particles including surface particles in a normal way. On the other hand, the negative-phase particles are randomly inserted into the positive-phase particles, and correspondingly their color functions are adjusted into positive-phase 1.

For the surface particles, in order to constrain the movements on the geometry surface, three numerical strategies are applied. Firstly, the surface particles only interact with their neighbors belonging to the surface particles as well. For surface particle $i$, the acceleration due to repulsive force interacting with particle $j$ is

$$\mathbf{f} = \begin{cases} m_j\left(\dfrac{p_i}{\rho_i^2} + \dfrac{p_j}{\rho_j^2}\right)\dfrac{\partial W(r_{ij}, h)}{\partial r_{ij}}\,\mathbf{e}_{ij}, & \text{if color of particle } j \text{ is } 0, \\[4mm] \mathbf{0}, & \text{otherwise} \end{cases} \qquad (2.34)$$

Secondly, before updating the acceleration, the total force of one surface particle is mapped into the tangential direction of the geometry surface so that the normal force is zero by

$$\begin{cases} \mathbf{F}_i = \mathbf{F}_i - (\mathbf{N}_i \cdot \mathbf{F}_i)\mathbf{N}_i, & (2.35) \\ \mathbf{N}_i = \mathbf{N}(\mathbf{r}_i). & (2.36) \end{cases}$$

Even though the surface particles merely move with the tangential velocity, the new updated position may still depart from the geometry surface $\Gamma$. In order to restore the accurate representation of geometry, the surface particles are remapped onto $\Gamma$ by

$$\mathbf{r}_i = \mathbf{r}_i - \phi_i \mathbf{N}_i. \qquad (2.37)$$

Considering that the total mass $M_p$ involved in the positive-phase computational domain can be calculated by the integral Eq. (2.14) and each particle features the same unity mass, the total particle quantity $N_p = M_p$ necessary to fill the positive-phase domain is derived immediately as mass is conservative during the particle evolution. One straightforward way to initialize the particle distribution is to randomly sample particles in the computational domain without the distinction between positive-phase and negative-phase region. An alternative choice is to sample particles according to the distribution of the target density function in the positive-phase domain. Despite that the later choice can reduce the total computational efforts significantly, the former technique is employed in the following to demonstrate numerical robustness.

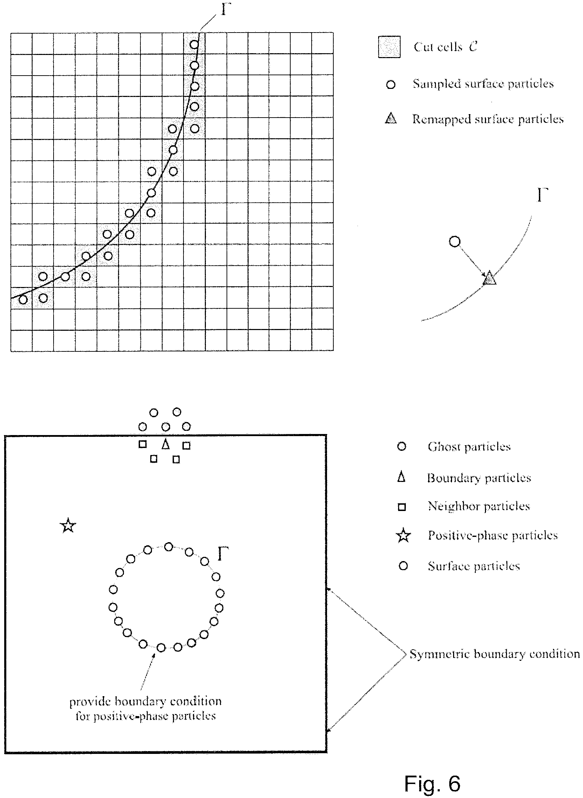

In terms of the surface particles, the total quantity is $N_{p,s} = M_{p,s}$ in a similar way, and they serve two functions. One is to represent the geometry surface $\Gamma$, the other is to function as boundary condition for the other colored particles preventing them penetrating from the positive phase into the negative phase. With the observation that the geometry surface $\Gamma$ has already been identified by the cut-cells C, the initialization of these surface particles is based on sampling on these cut-cells. In the first step, surface particles are generated at the cell centers of cut-cells C. Since the amount of cut-cells generally does not coincide with $N_{p,s}$, delete and insert operations are employed randomly and iteratively until the exact number $N_{p,s}$ of the surface particles is obtained. This procedure is highly efficient as the index of cut-cells C can be accessed within $O(1)$ operations. For the second step, all the sampled surface particles are mapped onto the geometry surface $\Gamma$ by Eq. (2.37), as shown in the upper panel of Fig. 6.

Since the particle smoothing length is interpolated from the background mesh by Eq. (2.26), the particle interaction cut-off may differ by orders of magnitudes depending on the user-defined maximum, and minimum mesh size $h_{max}$, $h_{min}$ and hence may create numerical difficulties with respect to the implementation of the boundary condition for the domain borders. The typical ghost particle method for simulations with constant interaction cut-off induces prohibitive arithmetic overhead as the particles located in a region of size equivalent to maximum particle interaction cut-off radius must be mirrored for all domain borders. Here, the dynamic ghost particle method enforcing the symmetric condition for all the domain borders is applied as shown in the lower panel of Fig. 6. The idea is that all the prototypes of ghost particles which interact with specific boundary particle must be its neighbors inside the computational domain. Firstly, the boundary particles are distinguished by comparing the particle interaction cut-off and the relevant distance from the domain borders. Secondly, for a specific boundary particle, the 0020 neighbor particles inside the computational domain are identified by a fast neighbor search algorithm. Then, all the ghost particles are temporally reconstructed by mirroring domain-interior neighbors imposing symmetric condition and the repulsive force from these ghost particles are accumulated at the same time.

A Verlet list, which provides particle neighbor access within $O(1)$ operations, is widely used in general particle simulation of constant smoothing length and can be constructed efficiently by the cell linked list data structure. These two algorithms, however, quickly become ineffective when the particle interaction cut-off is adaptive over a wide range. Here, a multi-resolution based fast neighbor searching algorithm is applied. Specifically, each particle possesses an attribute value *Tree_level*, which is determined as *l* if

$$\Delta_{l+1} < r_c < \Delta_l, \quad (2.38)$$

where $\Delta_l$, $r_c$ represent the size of cell linked list on level *l* and the particle force interaction cut-off radius respectively.

Each particle is then registered in the cell linked list on level *l = Tree_level* with index

$$(i, j) = \left( \text{int}\left(\frac{r_x}{\Delta_l}\right), \text{int}\left(\frac{r_y}{\Delta_l}\right) \right), \quad (2.39)$$

where $(r_x, r_y)$ represents the coordinate of specific particle. Here, the corresponding cell linked list is defined as the host cell linked list of this particle. To ensure that all the particles are recorded not only in its host cell linked list on *Tree_level* but also in parent cell linked lists of coarser levels, a projection operator is applied recursively from the finest level to the coarsest level.

Since then, particle *i* searches its host and adjacent cell linked lists on *l = Tree_level* and collect the target particle *j* as its neighbor if

$$r_{ij} \leq \max\left(r_{c,i}, r_{c,j}\right). \quad (2.40)$$

in which $r_{ij} = |\mathbf{r}_i - \mathbf{r}_j|$, is satisfied. During this procedure, each particle can access the others registered on the same level and the ones projected from the finer level with smaller $r_c$. Synchronously, the Verlet list is constructed. Moreover, searching neighbor particles across multiple levels is unnecessary and hence the efficiency is tremendously elevated. This fast neighbor searching algorithm is straightforward to be parallelized on shared-memory modern machines.

Different from the SPH and molecular dynamics, for which a Velocity-Verlet time integral algorithm with second-order accuracy is widely utilized, a simple time integration method solving the model equations is applied as

$$\tilde{\mathbf{v}}_{n+\frac{1}{2}} = \mathbf{v}_n + 0.5\mathbf{a}_n\Delta t,$$

$$\mathbf{v}_{n+\frac{1}{2}} = \tilde{\mathbf{v}}_{n+\frac{1}{2}} + 0.5\tilde{\mathbf{a}}_{n+\frac{1}{2}}\Delta t, \quad (2.41)$$

$$\mathbf{r}_{n+1} = \mathbf{r}_n + \mathbf{v}_{n+\frac{1}{2}}\Delta t,$$

where in the first step, the acceleration $\mathbf{a}_n$ is calculated from the repulsive force $\mathbf{Fp}$ and the $\tilde{\mathbf{v}}_{n+\frac{1}{2}}$ at mid-point is predicted. Then $\tilde{\mathbf{a}}_{n+\frac{1}{2}}$ is obtained from the viscous force $\mathbf{F_v}$, which is computed utilizing the predicted velocity $\tilde{\mathbf{v}}_{n+\frac{1}{2}}$ in the first step. At last, new particle coordinates are updated according to the modified velocity field $\mathbf{v}_{n+\frac{1}{2}}$ in the second step.

Considering numerical stability, the time-step $\Delta_t$ is constrained by body force criteria

$$\Delta t \leq 0.25 \sqrt{\frac{r_c}{|\mathbf{a}|_{\max}}}, \quad (2.42)$$

CFL criteria assuming that sound speed $c \approx 40|\mathbf{v}|_{\max}$ and viscous criteria

$$\Delta t \leq \min\left(\frac{1}{40}\frac{r_c}{|\mathbf{v}|_{\max}}, 0.125\frac{r_c^2}{\nu}\right). \quad (2.43)$$

The detailed flowchart of adaptive smoothing length SPH simulation, including target function definition and mesh generation, is given in Algorithm 3.

Algorithm 3 - Flowchart of adaptive smoothing length SPH simulation:

1: initialize the SPH simulation and set the parameters;
2: define the target feature-size function and the target density function by Algorithm 2;
3: initialize $N_p$ number of particles by randomly sampling in the computational domain;
4: initialize $N_{p,s}$ number of surface particles by sampling based on the cut-cells C as shown in Fig. 6;
5: **while** convergence criteria are not satisfied **do**
6: define the particle target density, the smooth length and other attribute values (Eq. 2.25, Eq. 2.26, Eq. 2.33, Eq. 2.36);
7: determine the particle color function except for the surface particles;
8: detect the negative phase particles and randomly insert them into the positive-phase particles while changing their color function as positive-phase;
9: register the particles to dynamic cell linked list and construct the Verlet list utilizing the fast neighbor searching algorithm;
10: compute the pressure force **(Fp);**
11: detect and mark the boundary particles; impose the symmetry condition for the boundary particles as shown in Fig. 6 and accumulate the force from the temporally reconstructed ghost particles;
12: update the acceleration due to the pressure force and set the physical time step (Eq. 2.42);
13: remove the accumulated force in the normal direction for the surface particles (Eq. 2.35);
14: update the predicted velocity;
15: set the kinematic viscous coefficient for the particles (Eq. 2.29);
16: compute the viscous force **($\mathbf{F_v}$);**
17: remove the accumulated force in the normal direction for the surface particles (Eq. 2.35);
18: update the modified velocity;
19: set the physical time step (Eq. 2.43);

20: update the position;

21: remap the surface particles onto the geometry surface (Eq. 2.37);

22: reset the velocity to zero ($\mathbf{F_f}$);

23: generate statistics about the average particle neighbor number and adjust the coefficient $\vartheta$ in Eq. (2.26), if necessary;

24: for every iteration, generate the corresponding mesh and check the convergence;

25: **end while**

26: output the generated unstructured mesh, e.g. for displaying;

27: end.

In the following, the parallel Delaunay triangulation is introduced, wherein the efficiency is greatly improved compared with the traditional Delaunay triangulation algorithm.

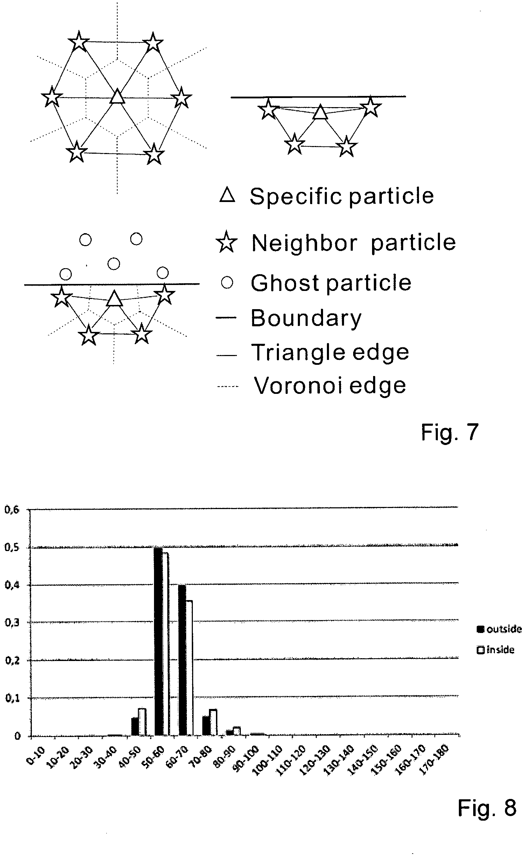

As far as the SPH simulation is convergent according to Algorithm 3, the particle coordinates are well conditioned imposing isotropy and smoothness conditions. For typical SPH simulations, the average particle neighbor number is 25 in a two-dimensional case and 75 in a three-dimensional case. As shown on the left panel of Fig. 7, for a general domain-interior particle, these neighbors are sufficient to maintain the local Voronoi graph which is consistent to the globally valid Voronoi diagram since the mandatory number is at least 6. In the present implementation, by the adaptive adjustment of the coefficient $\vartheta$ in Eq. (2.26), the average particle neighbor number is maintained varying between 8 ~ 10 as a compromise between computational cost and accuracy. To emphasize that, it is unnecessary to enforce the standard particle neighbor number as only a steady solution is pursued.

As shown in the middle panel of Fig. 7, the ill-shaped irregular triangles may be generated based on the boundary particles close to the domain borders following the above idea. Only with the domain-interior neighbors, it is insufficient not only for a consistent SPH force integral but also for conforming locally a valid Voronoi graph. Similarly to the idea to deal with the force integral, the dynamic ghost particle method is applied enforcing the symmetry condition as illustrated on the right panel of Fig. 7.

Since each particle generates a locally valid Voronoi graph according to its neighbor information, this process is inherently suitable for parallelization. By exploiting the duality with the Delaunay triangulation, the unstructured mesh with Delaunay triangles hence can be generated in a parallel manner. The complexity of popular algorithms, i.e. the divide and conquer algorithm or Fortune's sweep line algorithm, for globally valid Voronoi graph construction is $n \log n$. Here, the Fortune's sweep line algorithm is applied as example for generating the local Voronoi tessellation. Assuming that $m$ stands for the particle neighbor number and $p$ denotes the number of parallel processing units, rather than $n \log n$, the complexity is dramatically reduced to be $\frac{n}{p} m \log m.$ Hence, the efficiency can be remarkably enhanced on modern computational resources particularly for the large-scale mesh generation.

For an isotropic mesh, the mesh quality can be measured by the parameters $G_{min}$, $G_{avg}$, $\theta_{min}$, $\theta_{avg}$, $\%_{<30°}$ and the angle histogram to check the regularity. For a specific triangle, $G$ is defined as $2\sqrt{3}\frac{S}{ph}$, where $S$ means the triangle area, $p$ means half-perimeter, and $h$ means the length of longest edge. $G_{min}$, $G_{avg}$ represent the minimum and average mesh quality, respectively. $\theta_{min}$ is the minimum angle of the smallest angles of all triangles, and $\theta_{avg}$ denotes the average of the minimum angles. $\%_{<30°}$ represents the percentage of triangles whose smallest angles are less than 30°.

Following, a set of benchmark test cases are conducted to validate the performance of the proposed mesh generation method. The proposed algorithms may be programmed under C++ framework with object oriented concepts. For all the generated meshes presented in the following, the typical smoothing process or further quality optimization algorithm in other mesh generation methods is not employed.

Zalesak's disk

A Zalesak's disk geometry composed of a slotted circle of radius 15 is considered. The slot width and length are 5 and 25, respectively, and the computational domain is [0, 100]$\times$[0, 100]. As shown in the upper left panel of Fig. 2, the geometry singularities, i.e. the sharp corners, suffer from serious smearing in the reconstructed interface based on the level-set function. The multi-resolution adaptive mesh with an effective resolution of 512 $\times$ 512, i.e. a minimum spatial step $\Delta = 0.1953125$, is constructed to allow for efficient solving of the model equations as shown in the upper right panel. The minimum distance function $\psi$ from singularities and the diffused geometry curvature function $S_\kappa$, illustrated in the bottom left and right panels, are obtained utilizing Algorithm 2. $S_\kappa$ is globally smooth in the computational domain.

The adaptive unstructured mesh is generated both outside and inside the disk, for the purpose of possible internal and outflow-field analysis. The four user-defined parameters are demonstrated in Table 1. It can be noticed that a high-quality mesh with $G_{avg} \geq 0.92$ and $\theta_{avg} \geq 53.89°$ is generated by the proposed method for both cases. The minimum

triangle angle $\theta_{min} \geq 36.63°$ and $G_{min} \geq 0.64$ demonstrates the capability of the SPH method in equilateral-triangle preservation, in comparison with that of the original Delaunay refinement algorithm is proven to terminate with size-optimal quality triangulations of $\theta \leq 20.7°$ for given set of segments, and of $\theta \leq 30°$ for given set of points. An even larger minimum angle threshold typically leads to a termination problem or an excessively large size of the mesh which is impractical for applications. As shown in Fig. 8, the resulting angle distribution is remarkable, and approximatly 85% of angles are around $50° \sim 70°$.

Table 1 - Zalesak's disk

| | $h_{max}$ | $h_{max,t}$ | $h_{min,t}$ | $K_a$ | $G_{avg}$ | $G_{min}$ | $\theta_{avg}$ | $\theta_{min}$ | $\%_{<30°}$ | $N_p$ | $N_s$ | $N_c$ | $N$ |
|---|---|---|---|---|---|---|---|---|---|---|---|---|---|
| outside | 40Δ | 9Δ | 1.5Δ | 100 | 0.93 | 0.64 | 54.44° | 36.63° | 0.0 | 2825 | 239 | 4 | 5790 |
| inside | 6Δ | 5Δ | 1.5Δ | 100 | 0.92 | 0.66 | 53.89° | 38.31° | 0.0 | 2364 | 317 | 4 | 5047 |
| While $N$ denotes the total number of generated triangles, $N_p$, $N_s$ and $N_c$ denote the total quantity of particles involved in the mesh generation region, on the geometry surface and for the singularities, respectively. | | | | | | | | | | | | | |

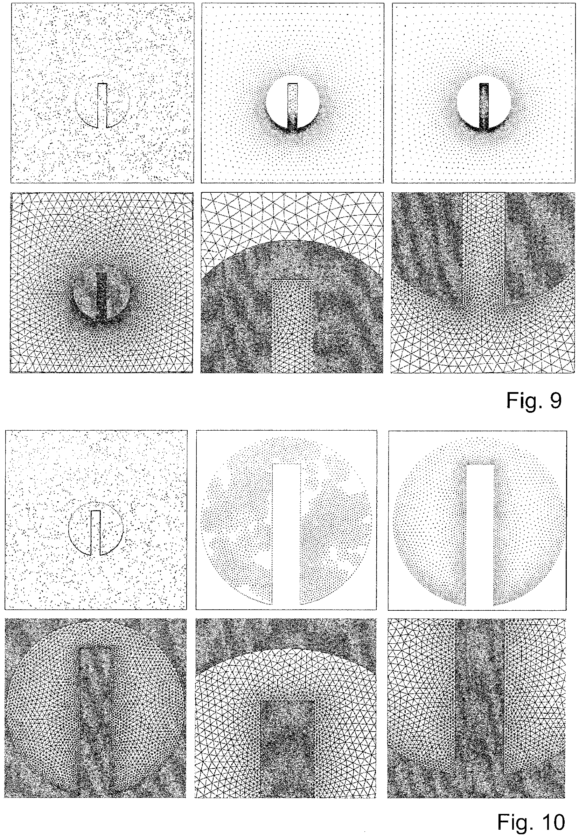

Fig. 9 and Fig. 10 show snapshots of the particle simulation and the generated mesh with Delaunay triangulation. With a random particle distribution as the initial condition, the particles evolve to fill the mesh generation region while converging to conform to the local target feature-size function and the density function as well. Once the particle system reaches the equilibrium, all particles possess roughly the same quantity of neighbors, except in the vicinity of the geometry surface. Uniformly high-quality triangles are generated both in the region close to geometry surface and in the far field. Although the singularities, which are extremely critical for finite element analysis, are inevitably smeared by the level-set based discretization as shown in Fig. 2, through introducing the characteristic particles fixed at the corners, the reconstructed mesh eventually recovers these geometry singularities exactly. The complex boundary recovery algorithm, which is one key technique in Delaunay refinement based and Centroidal Voronoi tessellations based mesh generation, is not necessary.

Complex gear

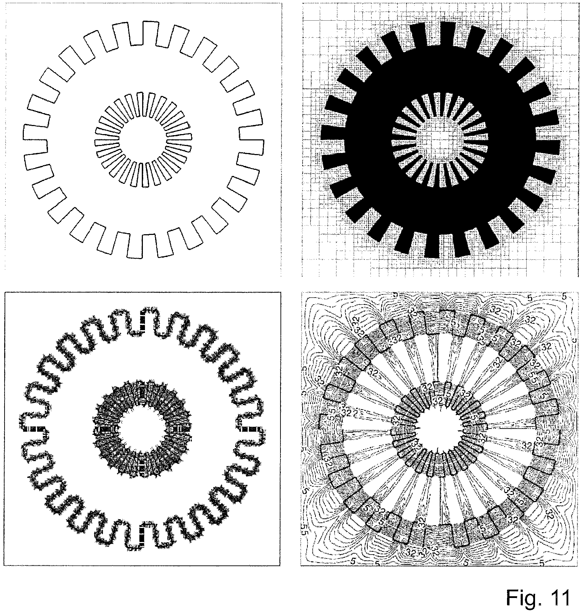

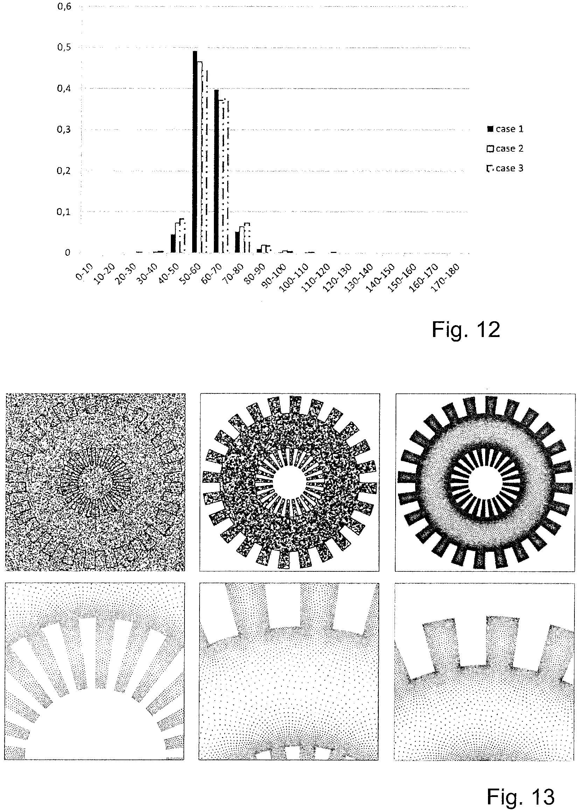

In this case, the mesh generation for a complex gear geometry, with 24 sawtooth patterns and 192 corners, is conducted, as shown in the upper left panel of Fig. 11. The computational domain is $[0, 46] \times [0, 46]$. The adaptive multi-resolution based background mesh with effective finest resolution $\Delta = 0.0449$ is constructed as indicated in the upper right panel. The two panels in the bottom of Fig. 11 give the $\psi$ distribution in the narrow band of geometry interface and the diffused globally effective curvature parameter $S_\kappa$. Benefiting from the preconditioning of the multi-resolution mesh, these two characteristic parameters can be solved to convergence rapidly even for a geometry with complex structures.
As shown in Table 2, three sets of user-defined input parameters with gradually increasing mesh adaptation are implied to validate the performance of the method. Since there are many corners on the geometry surface, the parameter $K_a$ is defined comparably large such that the major adaptation is due to the singularities. As expected, in all three cases, the average mesh quality is maintained above 0.913 while the minimum triangle angle is larger than 28.44° for this complex geometry. The angle distribution histogram in Fig. 12 also demonstrates the high-quality of the generated mesh in all three cases. It can be concluded that the mesh quality is not sensitive to the adaptation strength.

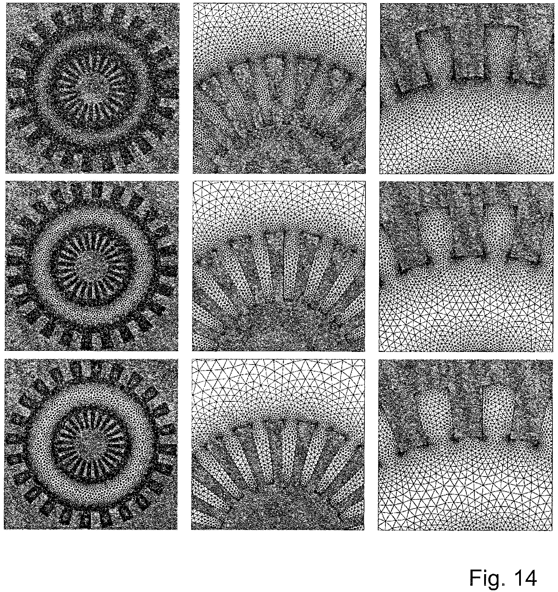

Fig. 13 gives snapshots of a particle evolution and the zoom-in views. Regardless of the complexity of this geometry, the major characteristics, e.g. thin sawtooth in the inner ring and sharp 90° corners, are well resolved by the adapted surface particles and the characteristic particles in the light of the target featuring functions. In Fig. 14, the comparison of generated meshes with different adaptation strength demonstrates the high reliability and performance of the method.

Table 2 - Complex gear

| | $h_{max}$ | $h_{max,t}$ | $h_{min,t}$ | $K_a$ | $G_{avg}$ | $G_{min}$ | $\theta_{avg}$ | $\theta_{min}$ | $\%_{<30°}$ | $N_p$ | $N_s$ | $N_c$ | $N$ |
|---|---|---|---|---|---|---|---|---|---|---|---|---|---|
| case1 | 15Δ | 4Δ | 2Δ | 50 | 0.931 | 0.55 | 54.32° | 32.0° | 0.0 | 34970 | 5104 | 192 | 75236 |
| case2 | 20Δ | 6Δ | 2Δ | 50 | 0.918 | 0.56 | 53.44° | 31.47° | 0.0 | 22523 | 4160 | 192 | 49398 |
| case3 | 25Δ | 8Δ | 2Δ | 50 | 0.913 | 0.482 | 52.81° | 28.44° | 0.0083 | 16112 | 3566 | 192 | 35982 |
| While $N$ denotes the total number of generated triangles, $N_p$, $N_s$ and $N_c$ denote the total quantity of particles involved in the mesh generation region, on the geometry surface and for the singularities, respectively. | | | | | | | | | | | | | |

Circles

In this case, we consider two geometry configurations composed of circles. The computational domain is [0, 100] × [0, 100] and the finest resolution of the adaptive mesh is Δ = 0.09765625. For the first case, five circles with the same radius are randomly packed in the domain, while for the second case, five circles with different radii are embedded within each other.

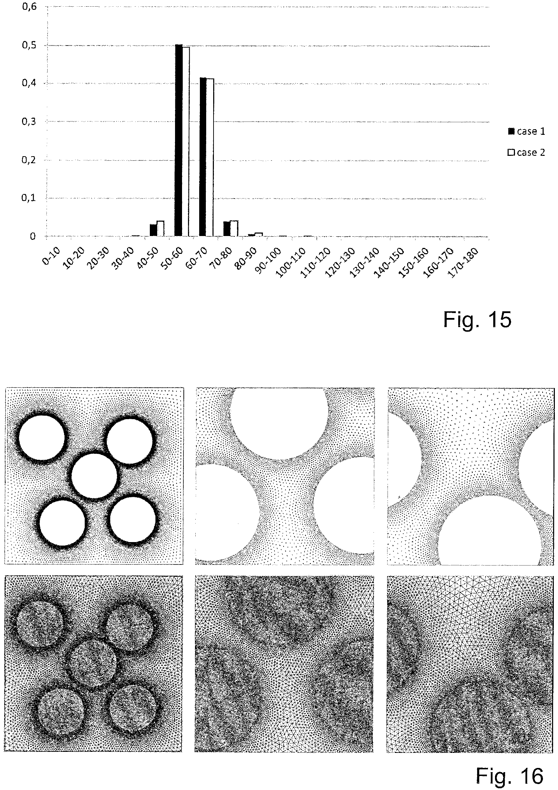

The initial condition setting is shown in Table 3. For both cases, a high quality mesh is generated with $G_{avg} \geq$ 0.93 and $G_{min} \geq 0.60$. The globally minimum triangle angle $\theta_{min} \approx 38.65°$ and $\theta_{min} \approx 35.63°$ demonstrate the excellent equilateral property. As also demonstrated by the angle distribution histogram, the triangle angles predominantly are in the interval of 50° ~ 70°. The angle distribution histogram is shown in Fig. 15. No triangles with obtuse angle larger than 100° are produced.

Table 3 - Circles

| | $h_{max}$ | $h_{max,t}$ | $h_{min,t}$ | $K_a$ | $G_{avg}$ | $G_{min}$ | $\theta_{avg}$ | $\theta_{min}$ | $\%_{<30°}$ | $N_p$ | $N_s$ | $N_c$ | $N$ |
|---|---|---|---|---|---|---|---|---|---|---|---|---|---|
| case1 | 40Δ | 4Δ | 4Δ | 0 | 0.939 | 0.64 | 54.88° | 38.65° | 0.0 | 14262 | 1213 | 0 | 29496 |
| case2 | 60Δ | 8Δ | 2Δ | 0.2 | 0.937 | 0.60 | 54.85° | 35.63° | 0.0 | 5157 | 386 | 8 | 10564 |

While $N$ denotes the total number of generated triangles, $N_p$, $N_s$ and $N_c$ denote the total quantity of particles involved in the mesh generation region, on the geometry surface and for the singularities, respectively.

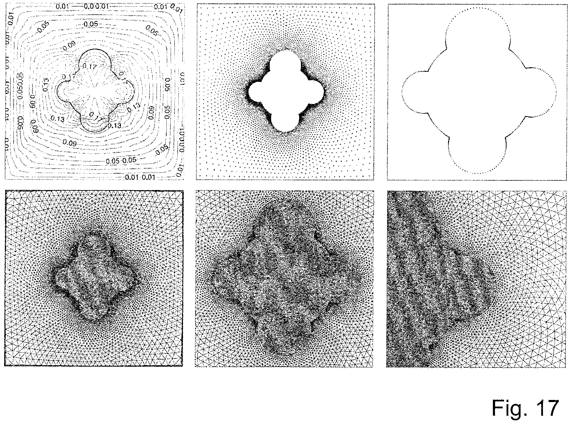

Fig. 16 gives the converged particle distribution and the generated mesh. Each particle features almost the same neighbor number, indicating that the total energy of the particle system is optimized to minimum and an approximate force equilibrium is achieved. The zoom-in views demonstrate the well regularized particle distribution and hence the high-quality triangles in the narrow channel between the circles as well as in the vicinity of the geometry surface. The upper left panel of Fig. 17 shows the diffused $S_\kappa$ distribution. In the upper middle and right panels, the particle adaptation due to the effects of singularities and geometry surface curvature can be observed. As shown in the bottom of Fig. 17, the geometry surface is well captured as well as the sharp corners.

Summary of embodiment 2:

With regard to embodiment 2, we propose a novel adaptive isotropic unstructured mesh generation method based on SPH particle simulations. Three independent subproblems are defined and solved dedicated to the high-quality mesh. In detail:

We propose a new method to define the physically meaningful and globally smooth target feature-size function and target density function. Three characteristic fields, consisting of the level-set function $\phi$, the minimum distance function $\psi$ and the diffused curvature parameter $S_\kappa$, are designed based on a set of model equations. While the minimum distance function $\psi$ successfully takes into account the mesh adaption due to singularities, the diffused curvature parameter $S_\kappa$ properly propagates the effects of the geometry surface curvature into the domain interior region. All the model parameters are solved on a multi-resolution adaptive mesh so that the computational costs and storage needs are optimized. An advantage of the method over traditional particle-based algorithms is that the total mass in the mesh generation region and that constrained on the geometry surface can be integrated so that an adequate particle quantity to fill the domain can be determined in advance.

We propose an adaptive smoothing length SPH method to solve a set of physics-driven model equations, which describe particle evolution. A special version of an equation of state is introduced so that a direct density summation with large errors is avoided. Meanwhile, as can be derived from the equation of state, only under the condition that the particle density coincides with the target density function, the particle system converges and reaches the equilibrium state. In order to improve numerical stability and robustness, viscous and skin-friction models are developed with a tailored time integration algorithm. Each particle possesses several physical attributes and is evolved with different numerical strategies according to its color function.

We propose a parallel fast Delaunay triangulation method based on the observation that the particle neighbors of SPH are complete for conforming to a local valid Voronoi diagram, which is consistent to the global effective Voronoi tessellation. Since each particle can generate a local Voronoi diagram separately, by utilizing the duality, the complexity of the Delaunay triangulation is significantly reduced to $\frac{n}{p} m \log m$ compared with traditional methods. The incompleteness of the boundary particles close to domain borders can be cured by the temporally reconstructed ghost particle method enforcing a symmetric boundary condition.

Numerical validation reveals that a high-quality adaptive unstructured mesh can be guaranteed with the method. Furthermore, it is promising that the notorious sliver-element problem in three-dimensional case exhibited by the traditional Delaunay triangulation based mesh generation method can be cured by the physics-driven methodology. Although not shown explicitly here, the adaptive refinement and coarsening of an unstructured mesh according to the local flow scales are straightforward to be considered by redefining the optimization objective functions. The method can also be extended to the mesh generation of free and moving boundary problems, e.g. multi-phase interface tracking simulations.

Third embodiment - adaptive anisotropic mesh

Firstly, the basics of the metric tensor in the Riemannian geometry are recalled and the anisotropic target-function definition according to the level set based geometry description is discussed. It can be straightforwardly extended to the definition of an anisotropic metric tensor based on the solution error estimate.

The ultimate goal of anisotropic mesh generation is to generate a mesh in a canonical Euclidean physical space, for which the mesh edges are equilateral and approaching unity in the mapped Riemannian space.

In contrast to the Euclidean geometry, where the definition of distance and angle is isotropic, in Riemannian geometry, the space is distorted and typically characterized by an anisotropic metric tensor $\mathcal{M}$ (x). The metric tensor $\mathcal{M}$ (x), which can describe the size, the shape and the orientation of mesh elements, is a symmetric 2 by 2 matrix in two-dimensional problems and a 3 by 3 matrix in three-dimensional problems. It can be deduced based on the solution error estimate or the geometry characteristics.

We firstly consider the Euclidean metric space ($\mathbb{R}^2$, $\mathcal{M}$ ), the metric matrix $\mathcal{M}$ is symmetric positive-definite and thus can be theoretically diagonalized as

$$\mathcal{M} = \mathcal{R}^T \Lambda \mathcal{R} \quad (3.1)$$

by spectral decomposition. While $\Lambda$ is the diagonal matrix composed of the strictly positive eigenvalues $\lambda_i$ of $\mathcal{M}$ , $\mathcal{R}$ denotes the orthonormal matrix composed of the eigenvectors, and $\mathcal{R}^T \mathcal{R} = \mathcal{R}\mathcal{R}^T = \mathcal{I}$. The eigenvalue $\lambda_i = \frac{1}{h_i^2}$, where $h_i$ denotes the scale size aligned with the corresponding eigendirection of $\mathcal{M}$ .

The geometric operations are redefined, e.g. the dot product of two nonzero vectors is

$$\langle \mathbf{u}, \mathbf{v} \rangle_{\mathcal{M}} = \mathbf{u}^T \mathcal{M} \mathbf{v}, \quad (3.2)$$

and the cross product is

$$\mathbf{u} \times \mathbf{v}|_{\mathcal{M}} = \sqrt{\det(\mathcal{M})} \, (\mathbf{u} \times \mathbf{v}). \quad (3.3)$$

The angle and area definitions can be derived as

$$\cos(\theta_{\mathcal{M}}) = \frac{\langle \mathbf{u}, \mathbf{v} \rangle_{\mathcal{M}}}{\|\mathbf{u}\|_{\mathcal{M}} \|\mathbf{v}\|_{\mathcal{M}}}, \quad \text{and} \quad |\Delta|_{\mathcal{M}} = \sqrt{\det(\mathcal{M})} \, |\Delta|, \quad (3.4)$$

where $\|\mathbf{u}\|_{\mathcal{M}} = \sqrt{\langle \mathbf{u}, \mathbf{u} \rangle_{\mathcal{M}}}$ and $|\Delta|$ represents the Euclidean area of the triangle.

For a Riemannian space $\mathbf{M} = (\mathcal{M}(x))_{x \in \Omega}$, in which the metric tensor varies smoothly throughout the computational domain, the length and area definitions can be extended from that in Euclidean metric space ($\mathbb{R}^2, \mathcal{M}$) by taking into account the variation of the metric tensor.

Provided that $\Gamma = \Gamma(t)$ with parameter $t \in [0,1]$, $\Gamma(0) = x_i$, $\Gamma(1) = x_j$ is a path connecting points $i$ and $j$ in Riemannian space M, the conventional geodesic length of $\Gamma$ is defined as

$$l_{\mathbf{M}}(\Gamma) = \int_0^1 \sqrt{\dot{\Gamma}(t)^T M(\Gamma(t))\dot{\Gamma}(t)}\,dt, \quad (3.5)$$

where $\dot{\Gamma} = \frac{d\Gamma}{dt}$. The direct computation of $l_{\mathrm{M}}(\Gamma)$ is not trivial and may be quite difficult for an arbitrary metric. One simplified choice is to assume that the metric $\mathcal{M}(x)$ varies linearly between the point i and $j$ and the integral is along a straight line $\Gamma(t) = x_i + t(x_j - x_i)$, then

$$l_{\mathbf{M}}(\Gamma) = \int_0^1 \sqrt{\mathbf{r}_{ij}^T\left(M^i + t(M^i - M^i)\right)\mathbf{r}_{ij}}\,dt,$$

$$= \int_0^1 \sqrt{(d_{ij}^i)^2 + t\left(\left(d_{ij}^j\right)^2 - \left(d_{ij}^i\right)^2\right)}\,dt, \quad (3.6)$$

$$= \frac{2}{3}\frac{(d_{ij}^i)^2 + d_{ij}^i d_{ij}^j + \left(d_{ij}^j\right)^2}{d_{ij}^i + d_{ij}^j},$$

where $\mathbf{r}_{ij} = \mathbf{r}_i - \mathbf{r}_j$ and $(d_{ij}^k)^2 = \mathbf{r}_{ij}^T M^k \mathbf{r}_{ij}$.

Here, we adopt an even simpler approximation assuming that the points $i$ and $j$ are close enough to each other. The distance between $i$ and $j$ can be evaluated as

$$l_{\mathbf{M}}(\Gamma) \approx d_{ij} = \sqrt{\mathbf{r}_{ij}^T \mathcal{M}_{ij} \mathbf{r}_{ij}}, \quad \mathcal{M}_{ij} = \frac{\mathcal{M}(x_i) + \mathcal{M}(x_j)}{2}. \quad (3.7)$$

Unlike the tailored directional distance, the distance definition by Eq. (3.7) is symmetric.

For a bounded domain $\Omega$ in Riemannian space M, the area is defined as

$$|\Delta|_{\mathbf{M}} = \iint_{\Omega} \sqrt{\det(\mathcal{M}(x))}\,ds. \quad (3.8)$$

Despite that the high-order accuracy computing can be achieved by a Gaussian quadrature integral or a metric interpolation, in general, a cruder approximation based on a first-order assumption is considered leading to

$$|\Delta|_{\mathbf{M}} = \sqrt{\det\left(\frac{\mathcal{M}(x_1) + \mathcal{M}(x_2) + \mathcal{M}(x_3)}{3}\right)}|\Delta| \quad (3.9)$$

for triangles with vertices $x_1$, $x_2$ and $x_3$.

One choice to construct the metric tensor $\mathcal{M}$ (x) is based on the Hessian matrix of a solution field. With the eigen-decomposition of the Hessian of a specific function f, $\mathcal{H}(f) = Q^T\text{diag}(\lambda_i)Q$ and $H_{i,j} = \frac{\partial^2 f}{\partial x_i \partial x_j}$, the metric can be devised as

$$\mathcal{M} = \frac{1}{\varepsilon_0 \text{Coef}^2 \cdot \max\{\text{CutOff}, |f|\}} |\mathcal{H}(f)|$$

$$= \frac{1}{\varepsilon_0 \text{Coef}^2 \cdot \max\{\text{CutOff}, |f|\}} Q^T\text{diag}(|\lambda_i|)Q, \quad (3.10)$$

where $\varepsilon_0$ denotes a parameter to define the level of the linear interpolation error, Coef denotes the multiplicative coefficient on the mesh size, CutOff denotes the limit threshold of the relative error estimate.

Here, one concern is the anisotropic mesh adaptation associated with the geometry characteristics, including the surface curvature and singularities. As shown with regard to embodiments 1 and 2, three characteristic parameters are designed to quantify the feature-size adaptation in a generic and elegant way and calculated by the following steps:

1. The globally smooth level-set function $\phi$ is obtained by solving the reinitialization equation.
2. Compute the minimum distance function $\psi$ from singularities constrained on the geometry surface by solving two simultaneous equations.
3. Redistribute the geometry curvature parameter by taking into account the effects of singularities, i.e. $\psi$.
4. Compute the geometrical parameters, i.e. normal direction **N**.
5. Calculate the globally effective curvature parameter $S_\kappa$ by solving the diffusion equation.

In terms of anisotropic property, the target feature-size function and the density function are additionally connected to the normal direction and can be expressed as

$$\begin{cases} h_{i,t} = f(\phi, \Psi, S_\kappa, \mathbf{N}), \\ \rho_t = g(\phi, \Psi, S_\kappa, \mathbf{N}). \end{cases} \quad (3.11)$$

In the two-dimensional case, the anisotropic target feature-size function consists of $h_{1,t}$ in the tangent direction of level-set isocontours and of $h_{2,t}$ in the normal direction of level-set isocontours. Five user-defined parameters are assumed as the input, including the globally maximum mesh size $h_{\max}$, the maximum size $h_{\max,t}$ in the tangent direction on the geometry surface, the minimum size $h_{\min,t}$ in the tangent direction on the geometry surface, the minimum size $h_{\min,n}$ in the normal direction on the geometry surface and the cut-off mean curvature $K_a$ at singularities for curvature redistribution.

The anisotropic target feature-size functions then can be defined as

$$\begin{cases} h = h_{\min,t} + \left(1 - \frac{\kappa - \kappa_{\min}}{\kappa_{\max} - \kappa_{\min}}\right)\left(h_{\max,t} - h_{\min,t}\right), \\ h_{1,t} = h + \frac{\phi}{\phi_{\max}}(h_{\max} - h), \\ h_{2,t} = h_{\min,n} + \frac{\phi}{\phi_{\max}}\left(h_{\max} - h_{\min,n}\right), \end{cases} \quad (3.12)$$

while the target density function is formulated as

$$\rho_t = \begin{cases} \dfrac{1}{h_{1,t}}, & 1D, \\[2ex] \dfrac{1}{h_{1,t}h_{2,t}}, & 2D, \\[2ex] \dfrac{1}{h_{1,t}h_{2,t}h_{3,t}}, & 3D. \end{cases} \qquad (3.13)$$

The total mass involved in the positive-phase domain, i.e. the mesh generation region, can be derived by the integral

$$M_p = \int_\Omega \rho_t \Delta dv, \qquad (3.14)$$

where

$$\Delta = \begin{cases} 1, \text{if } \phi > 0 \\[1ex] 0, \text{otherwise}. \end{cases} \qquad (3.15)$$

The total mass constrained on the geometry surface is derived by

$$M_{p,s} = \int_{\partial\Omega} \rho_t ds. \qquad (3.16)$$

Note that all these integrations are computed efficiently in physical space based on the background multi-resolution mesh, rather than in the embedding metric space.

Secondly, the physics-driven model equations and anisotropic SPH method are developed for anisotropic simulations with a special equation of state. The numerical algorithms are discussed in detail.

For an isothermal compressible flow, the Lagrangian form of the Navier-Stokes equations is

$$\frac{d\rho}{dt} = -\rho \nabla \cdot \mathbf{v}, \quad (3.17)$$

$$\frac{d\mathbf{v}}{dt} = -\mathbf{F_p} + \mathbf{F_v} + \mathbf{F_f}, \quad (3.18)$$

where $\rho$ is the fluid density, $\mathbf{v}$ is the velocity vector, and $F_p$, $\mathbf{F_v}$, $\mathbf{F_f}$ stand for the accelerations due to repulsive pressure force, viscous shear force and friction force respectively. This set of equations can be solved by anisotropic SPH (ASPH), which belongs to the variants of the standard SPH method, by replacing the isotropic kernel with an anisotropic smoothing kernel characterized by a tensor smoothing-length.

Hereafter, all particles are assumed to possess the same mass $m = 1$ in order to facilitate further derivation. In general, the particle density is calculated from the summation over all neighboring particles algebraically rather than solving the continuity equation Eq. (3.17). Following the definition of $d_i = \sum_j W_{ij}$ which is approximately the inverse of the specific particle volume, the particle average density is $m_i d_i$ and can be evaluated as

$$\rho_i = m_i \sum_j W(r_{ij}, h) = m_i \sum_j W_{ij} \quad (3.19)$$

where $r_{ij} = |\mathbf{r}_{ij}|$. The discretization of the conservative repulsive pressure force is given as

$$\mathbf{F_p} = \sum_j m_j \left( \frac{p_i}{\rho_i^2} + \frac{p_j}{\rho_j^2} \right) \frac{\partial W(r_{ij}, h)}{\partial r_{ij}} \mathbf{e}_{ij} = \sum_j m_j \left( \frac{p_i}{\rho_i^2} + \frac{p_j}{\rho_j^2} \right) \nabla W_{ij}, \quad (3.20)$$

where $\mathbf{e}_{ij} = \dfrac{\mathbf{r}_{ij}}{r_{ij}}$ is the normalized vector from particle $i$ to $j$.

In standard SPH, with the definition of a normalized position vector $\eta = \mathbf{r}/h$, the isotropic interpolation kernel function can be rewritten as $W(r,h) = W(\mathbf{r},h) = W(\eta)$. To this end, in a more general sense, a linear coordinate transformation is introduced by ASPH to map the physical space into a normalized position space by a tensor $\mathbf{G}$ with units of an inverse length-scale, i.e. $\eta = \mathbf{Gr}$. Such that

$$W(\eta) = W(\mathbf{Gr}), \quad (3.21)$$

and the standard SPH can be deemed as the degenerate case for which the tensor $\mathbf{G}$ is diagonal with a constant element $1/h$.

With the assumption that the distribution of the feature-size function is smooth enough locally, the gradient of the coordinate transformation tensor $\mathbf{G}$ can be neglected, i.e. $\nabla \mathbf{G} = 0$ and the spatial gradient of the kernel function for the inter-particle force evaluation can be derived as

$$\nabla W(\mathbf{Gr}) = \frac{\partial W(\mathbf{Gr})}{\partial \mathbf{r}} = \frac{\partial \eta}{\partial \mathbf{r}} \frac{\partial W}{\partial \eta} = \mathbf{G} \frac{\eta}{\eta} \frac{\partial W}{\partial \eta}. \quad (3.22)$$

In order to enforce rigorous spatial symmetrization, the kernel function $W_{ij}$ is expressed in terms of the average of both "gather" and "scatter" formalisms as

$$W_{ij} = \frac{1}{2} \left[ W(\eta_i) + W(\eta_j) \right], \quad (3.23)$$

meanwhile, the gradient of kernel function $\nabla W_{ij}$ is

$$\nabla W_{ij} = \frac{1}{2} \left[ \nabla W(\eta_i) + \nabla W(\eta_j) \right], \quad (3.24)$$

where

$$\eta_i = \mathbf{G}_i \mathbf{r}_{ij}, \quad \eta_j = \mathbf{G}_j \mathbf{r}_{ij}. \quad (3.25)$$

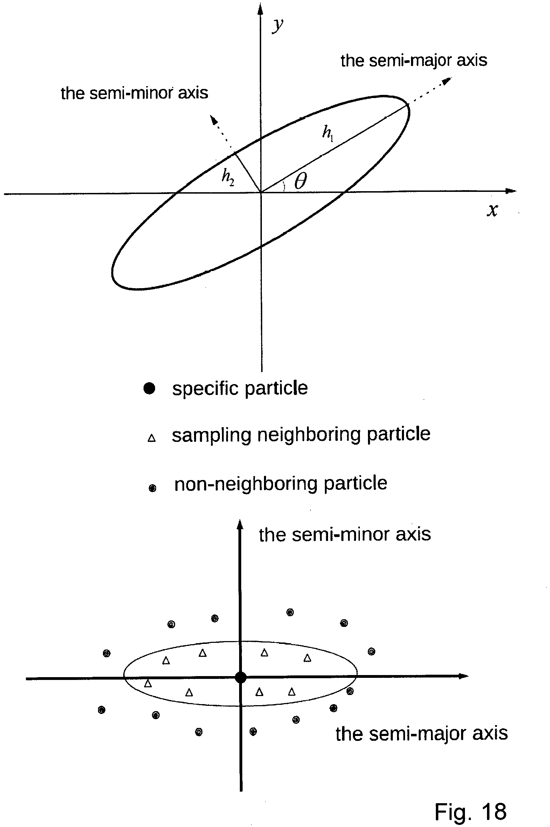

As shown in the upper panel of Fig. 18, the ellipsoid unit is uniquely defined by the semi-major axis $h_1$, the semi-minor axis $h_2$ and the position angle $\theta$ between the kernel-coordinate frame and the real-physical frame. In the primary kernel-coordinate frame, the tensor $\mathbf{G}$ is diagonal with elements equivalent to the inverse length-scale along the corresponding cardinal direction as

$$\mathbf{G}^k = \begin{pmatrix} \frac{1}{h_1} & 0 \\ 0 & \frac{1}{h_2} \end{pmatrix}. \quad (3.26)$$

The rotational relationship between the kernel-coordinate frame and the real-physical frame can be characterized by two transformation matrices

$$\mathbf{T}_r^{r\to k} = \begin{pmatrix} \cos\theta & \sin\theta \\ -\sin\theta & \cos\theta \end{pmatrix}, \quad \mathbf{T}_r^{k\to r} = \begin{pmatrix} \cos\theta & -\sin\theta \\ \sin\theta & \cos\theta \end{pmatrix}. \quad (3.27)$$

The real, symmetric matrix tensor **G** in the physical frame can be represented by the rotational transformations

$$\mathbf{G}^r = \mathbf{T}_r^{k\to r}\mathbf{G}^k\mathbf{T}_r^{r\to k}$$

$$\mathbf{G}^r = \begin{pmatrix} \frac{1}{h_1}\cos^2\theta + \frac{1}{h_2}\sin^2\theta & \left(\frac{1}{h_1} - \frac{1}{h_2}\right)\cos\theta\sin\theta \\ \left(\frac{1}{h_1} - \frac{1}{h_2}\right)\cos\theta\sin\theta & \frac{1}{h_1}\sin^2\theta + \frac{1}{h_2}\cos^2\theta \end{pmatrix}. \quad (3.28)$$

The tensor **G** in three dimensions can be straightforwardly derived in a similar way.

In the previous isotropic mesh generation, the spherical kernel function with a non-negative second-order derivative within the whole support domain is adopted for the SPH simulation. Here, it is further modified to incorporate the anisotropic-smoothing ellipsoidal kernel shape and the tensor smoothing-lengths. By introducing the generic notion of a normalized position $\eta$, it can be expressed as

$$W(\boldsymbol{\eta}) = \alpha \begin{cases} \eta^3 - 6\eta + 6, & 0 \leq \eta < 1, \\ (2 - \eta)^3, & 1 \leq \eta < 2, \\ 0, & 2 \leq \eta, \end{cases} \quad (3.29)$$

where the normalized constant is

$$\alpha = \begin{cases} \dfrac{1}{3\pi}|\mathbf{G}|, & 2D, \\ \dfrac{15}{62\pi}|\mathbf{G}|, & 3D. \end{cases} \quad (3.30)$$

The gradient of this kernel function is derived as

$$\nabla W(\boldsymbol{\eta}) = \alpha\mathbf{G}\frac{\boldsymbol{\eta}}{\eta}\begin{cases} 3\eta^2 - 6, & 0 \leq \eta < 1, \\ -3(2 - \eta)^2 & 1 \leq \eta < 2, \\ 0, & 2 \leq \eta. \end{cases} \quad (3.31)$$

As shown in the lower panel of Fig. 18, the first-order derivative of the kernel function preserves exact monotonicity throughout the support domain. When the particles approach to each other within a region where $\frac{r}{h} \leq \frac{2}{3}$ under compression, the inter-particle repulsive force hence increases rather than decreases as regular bell-shape like kernel functions, e.g. cubic spline kernels. The numerical robustness benefits from this kernel significantly since the possible pairing instability can be efficiently averted, particularly for an early-stage simulation where the particle distribution is vitally distorted and irregular.

Similarly to the embodiments 1 and 2, the pressure is defined by the equation of state as

$$p = p_0 \frac{\rho^2}{\rho_t^2}. \quad (3.32)$$

For the derived pressure force we obtain

$$\mathbf{F_p} = \sum_j m_j \left( \frac{p_0}{\rho_{t,i}^2} + \frac{p_0}{\rho_{t,j}^2} \right) \nabla W_{ij}, \quad (3.33)$$

where the SPH density term is replaced by the particle target density. Recalling that $\mathbf{F_p} = \frac{\nabla p}{\rho}$, the pressure force depends on the particle density and the pressure gradient. When and only when the particle distribution coincides with the target density objective function, i.e. $p = p_0 \frac{\rho^2}{\rho_t^2}$ is a constant throughout the computational domain, a convergent force equilibrium solution of the particle system can be obtained. Before the particle system converges, the direct particle density computing by Eq. (3.19) will induce large numerical errors as well as the problem of robustness due to the fact that the particle distribution is in a random state rather than at a regular state. Since this process is unnecessary with Eq. (3.32), the numerical robustness is remarkably enhanced.

While the particle target density

$$\rho_{t,i} = \rho_t(\mathbf{r}_i) \quad (3.34)$$

can be directly calculated from the background Eulerian adaptive mesh by bilinear interpolation, the linear coordinate transformation tensor **G** can be determined

$$\mathbf{G}\big(h_{1,i}, h_{2,i}\big) \approx \mathbf{G}\big(h_{1,t,i}, h_{2,t,i}\big) = \mathbf{G}\big(\vartheta h_{1,t}(\mathbf{r}_i), \vartheta h_{2,t}(\mathbf{r}_i)\big), \quad (3.35)$$

where $\vartheta$ is a scale factor designed to adjust the average particle neighbor number.

The Gersho's conjecture states that "asymptotically speaking, all cells of the optimal Centroidal Voronoi tessellation (CVT), while forming a tessellation, are congruent to a basic cell which depends on the dimension". The basic cell is a regular hexagon in two dimensions and is proved most likely to be a body-centered-cubic (BCC) lattice based CVT, i.e. the truncated octahedron, in three dimensions. In other words, the particle packing in the embedded isotropic space, forming a hexagon in two dimensions and an octahedron in three dimensions, features the lowest energy per unit volume and hence is the most stable structure. With this lemma, the average particle neighbor number is maintained around 6 in two dimensions and around 8 in three dimensions until convergence. Although the typical particle neighbor number is around 25 in two dimensions from the SPH perspective, 6.5 is adopted here dedicating to less computational costs. Since the density summation is avoided by Eq. (3.32), this low average particle neighbor number does not affect the convergent particle system.

Since the influence domain of the kernel function *W* with the tensor smoothing length is anisotropic featuring directionality, the multi-resolution based fast neighbor searching algorithm for isotropic standard SPH is further developed to incorporate the anisotropy.

The attribute value *Tree_level* of each particle is determined as *l* if

$$\Delta_{l+1} = \max(r_{i,c}) \le \Delta_l, \quad i = 1,2 \text{ in 2D}, \quad (3.36)$$

where $r_{i,c}$ denotes the particle force interaction cut-off radius aligned with the corresponding eigenvector of matrix **G.** Each particle is mapped and recorded in the host cell linked list on level *l* = *Tree_level* with index

$$(i,j) = \left( \text{int}\left(\frac{r_x}{\Delta_l}\right), \text{int}\left(\frac{r_y}{\Delta_l}\right) \right), \quad (3.37)$$

where $(r_x, r_y)$ represents the coordinate of the specific particle. The same projection operator as that in isotropic standard SPH is applied from the finest level to the coarsest level recursively. After that, particle $i$ searches its neighbors in its host and adjacent cell linked lists on *Tree_level,* and registers particle $j$ as its neighbor in the Verlet list on the condition that

$$\min(\eta_i, \eta_j) \le k, \quad (3.38)$$

in which k denotes the cut-off constant and depends on the employed kernel function.

For the outer domain borders, analogous to that in isotropic standard SPH simulation, the dynamically reconstructed ghost particle method imposing symmetric boundary condition is implied. In terms of the inner physical boundary condition of the geometry surface in standard SPH simulation, as long as the surface particle converges to the target density, the particle penetration from the positive phase, i.e. the mesh generation region, into the opposite phase can be efficiently prevented and the whole particle system is assured to converge to the target function with enough iterations. It is, however, not the natural case for the ASPH simulation.

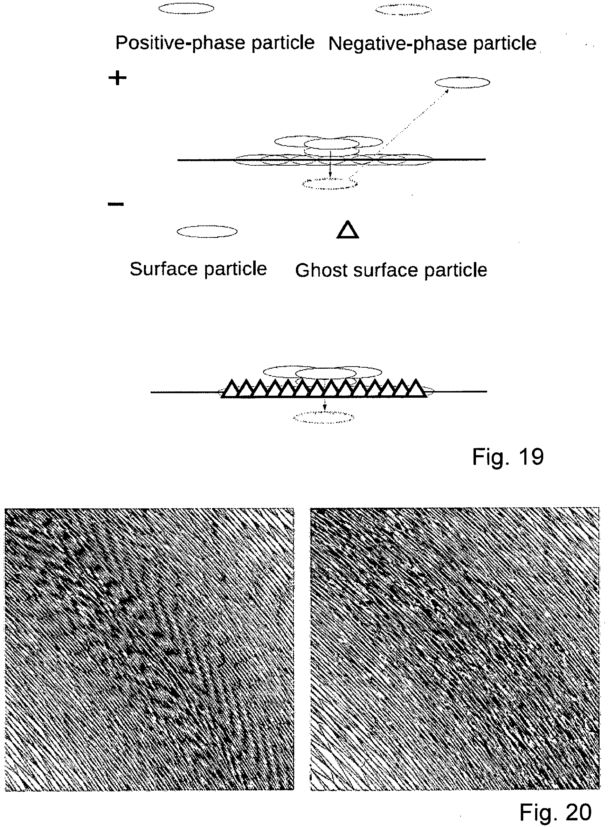

As shown in the left panel of Fig. 19, particularly during the early stage of the ASPH simulation, the ASPH density in the neighborhood of the geometry surface possibly exceeds the target density function vitally; for the particles in this vicinity, considering that the stretching ratio may be exceptionally large, the force integral is quite incomplete even though the closest neighboring surface particles already converge to the target. Consequently, most of particles in this region suffer from severe force unequilibrium and hence are driven to penetrate from the positive phase into the negative phase. Despite that all the particles in the negative phase will be randomly inserted into the positive phase once that they are identified in line with the attribute value $\phi_i$ in each iteration, it is indeed rather difficult for the whole particle system to converge as the particle penetration never relaxes.

As indicated in the right panel of Fig. 19, a set of ghost surface particles with isotropic-smoothing spherical kernel and constant-scale smoothing length $h \approx h_{\min,n}$ are proposed against the troublesome particle penetrations. These ghost surface particles are initialized by the sampling operation based on the cut-cells C and evolved to the equilibrium by solving the standard SPH constrained on the geometry surface in the same way as that of the general surface particles. Nevertheless, since the smoothing-lengths of the ghost surface particles are constant rather than adaptive and the initial particle distribution is considerably optimal, they typically converge rapidly.

In order to distinguish between the colors of positive-phase particles 1, negative-phase particles -1, and surface particles 0, the colors of these ghost surface particles are marked as -2 since the initialization. The evolving strategy of the ghost surface particles respects the same principle as the general surface particles, i.e. only the force summation from the particles with identical color is recorded. On the hand, the evolving strategy of the general positive-phase particles is amended to avert the dual count of the normal force from both the general surface particles and the ghost surface particles. Specifically, the general surface particles merely contribute to the tangent force while the ghost surface particles offer the normal force. For a general positive-phase particle $i$, in view of the notation that the inter-particle interaction with particle $j$ is $\mathcal{M}$ the acceleration due to the interplay with particle $j$ can be expressed as

$$\mathfrak{R} = \begin{cases} \mathcal{F} - (\mathbf{N}_i \cdot \mathcal{F})\mathbf{N}_i, & \text{if color of particle } j \text{ is } 0, \\ (\mathcal{F} \cdot \mathbf{N}_i)\dfrac{h_{2,i}}{h_{1,i}}\varsigma, & \text{if color of particle } j \text{ is } -2, \quad (3.39) \\ \mathcal{F}, & \text{otherwise,} \end{cases}$$

in which the constant parameter $\varsigma$ is identified to be 0.85 by considering the mesh quality close to the geometry surface.

In the following, the anisotropic mesh generation by Delaunay triangulation based on the metric tensor is outlined and the mesh quality measurement criteria is pointed out.

With the diagonal matrix $\Lambda(x)$ representing the smooth scaling field and the orthogonal matrix $\mathcal{R}$ $(x)$ denoting the rotation field defined by

$$\Lambda(x) = \begin{pmatrix} \dfrac{1}{h_1^2(x)} & 0 \\ 0 & \dfrac{1}{h_2^2(x)} \end{pmatrix}, \quad \mathcal{R}(x) = \begin{pmatrix} \cos\theta(x) & -\sin\theta(x) \\ \sin\theta(x) & \cos\theta(x) \end{pmatrix}, \quad (3.40)$$

the final reconstructed metric tensor $\mathcal{M}(x)$ can be assembled as

$$\mathcal{M}(x) = \mathcal{R}^T(x)\Lambda(x)\mathcal{R}(x)$$

$$= \begin{pmatrix} \dfrac{\cos^2\theta(x)}{h_1^2(x)} + \dfrac{\sin^2\theta(x)}{h_2^2(x)} & \dfrac{\cos\theta(x)\sin\theta(x)}{h_1^2(x)} - \dfrac{\cos\theta(x)\sin\theta(x)}{h_2^2(x)} \\ \dfrac{\cos\theta(x)\sin\theta(x)}{h_1^2(x)} - \dfrac{\cos\theta(x)\sin\theta(x)}{h_2^2(x)} & \dfrac{\sin^2\theta(x)}{h_1^2(x)} + \dfrac{\cos^2\theta(x)}{h_2^2(x)} \end{pmatrix} (3.41)$$

following the definition of Eq. (3.1). Assuming that $h_1(x) \geq h_2(x)$, the mesh stretching ratio is defined by

$$s = \frac{h_1(x)}{h_2(x)}, \quad (3.42)$$

when the particle system converges, the complete unstructured mesh with triangle elements can be constructed by connecting the particle-coordinates. Delaunay triangulation, which tends to maximize the smallest angle of the triangle elements and to avoid skinny triangles, is ideal for high-quality mesh generation. However, the generated mesh elements are as equilateral and isotropic as possible for a given set of particles. In terms of anisotropic mesh generation, the anisotropic metric tensor $\mathcal{M}(x)$ field ought to be considered in the Delaunay triangulation process so that the target feature-size function is fulfilled precisely.

Since a global mapping between Euclidean space and Riemannian space is impossible for practical problems, the metric tensor $\mathcal{M}(x)$ is roughly approximated as constant locally by simple linear average as

$$\mathcal{M} = \frac{1}{4}\sum_{i=1}^{4}\mathcal{M}(x_i). \quad (3.43)$$

Under this assumption, the most critical operator *circumcircle test* for the Delaunay triangulation is further modified to take into account the locally frozen metric $\mathcal{M}$.

For an anisotropic mesh, unlike an isotropic mesh, it is not straightforward to define an effective mesh-quality criterion. One choice is to assess the isotropic mesh quality after mapping the triangles from the Euclidean physical space into the Riemannian space. For triangles with vertices $x_1$, $x_2$ and $x_3$, a local approximate transformation matrix

$$Q = \frac{1}{3}\sum_{i=1}^{3}Q(x_i), \quad (3.44)$$

where $\mathcal{R}$ is defined to map the triangles. As mentioned before, the quality of the transformed triangles in the embedding space can be quantified by parameter $G_{area}$, $G_{min}$, $G_{avg}$, $\theta min$, $\theta_{avg}$, $\%_{<30°}$, and the angle histogram to check the regularity.

The area quality criterion $G_{area}$ is defined as

$$G_{\mathrm{area}}(\Delta_i) = \frac{N|\Delta_i|_{\mathbf{M}}}{\sum_{j=1}^{N}|\Delta_j|_{\mathbf{M}}}, \quad (3.45)$$

where $N$ denotes the total quantity of the triangles, to measure the area smoothness of triangles in the metric space. Since all the triangles are isotropic and feature the same area in this space, the optimal value of $G_{\mathrm{area}}$ should be 1. For a specific triangle, G is defined as $\varsigma$ where S means the triangle area, $p$ means half-perimeter, and $h$ means the length of longest edge. $G_{\mathrm{min}}$, $G_{\mathrm{avg}}$ represent the minimum and average mesh quality respectively. $\theta_{\mathrm{min}}$ is the smallest angle of the minimum angles of all triangles in the embedding space while $\theta_{\mathrm{avg}}$ denotes the average of the minimum angles. $\%_{<3o°}$ represents the percentage of triangles with the minimum angle less than 30°.

Following, several benchmark cases are simulated to validate the method.

First of all, a special case without a geometry surface is considered and the circular anisotropic tensor field metric can be given analytically as $\mathcal{M}(x) = \mathcal{R}^T(x)\mathrm{diag}(s(x)^2, 1)\mathcal{R}(x).$ The computational domain is [0, 100] $\times$ [0, 100] in two dimensions. As shown in Table 4, the maximum stretching ratio ranges from 20 to 80 and the overall scale adaptation is as large as 800 times.

From the quality statistics in Table 4, the average quality measurement $G_{\mathrm{avg}}$ and $\theta_{\mathrm{avg}}$ are maintained larger than 0.85 and 46.4° respectively, indicating the high quality of the generated meshes. With increasing maximum stretching ratio, all the other criteria degenerate. Nevertheless, compared with prior art methods, the method shows significant improvements. We also test the open-source library MMG2D, which optimizes the quality of an input mesh by edge swapping, point relocation and vertex insertion based on an anisotropic Delaunay kernel. The convergent particle coordinates with a maximum stretching ratio 80 obtained from our simulation are employed as the input for MMG2D to do further optimization without vertex insertion. Most of the quality criteria, particular for $G_{\mathrm{avg}}$ and $\%_{<30°}$, however, degenerate seriously as demonstrated in Table 4.. With the optimization by MMG2D, the mesh quality decreases in the high stretching-ratio region. Fig. 20 shows mesh details from the present method and from the optimization by MMG2D.

Table 4 - initial condition and quality statistics for analytical metrics (* MMG2D)

| | $h_{\mathrm{max}}$ | $h_{\mathrm{max},t}$ | $h_{\mathrm{min},t}$ | $h_{\mathrm{min},n}$ | $s_{\mathrm{max}}$ | $G_{\mathrm{avg}}$ | $G_{\mathrm{min}}$ | $\theta_{\mathrm{avg}}$ | $\theta_{\mathrm{min}}$ | $\%_{<30°}$ | $N_p$ | $N_s$ | $N_c$ | $N$ |
|---|---|---|---|---|---|---|---|---|---|---|---|---|---|---|
| case1 | 100Δ | 10Δ | 10Δ | 0.5Δ | 20 | 0.91 | 0.44 | 52.27° | 27.64° | 0.0035 | 14197 | 0 | 0 | 28318 |
| case2 | 100Δ | 10Δ | 10Δ | 0.25Δ | 40 | 0.85 | 0.27 | 47.60° | 16.32° | 1.78 | 21529 | 0 | 0 | 42983 |
| case3 | 100Δ | 10Δ | 10Δ | 0.1667Δ | 60 | 0.85 | 0.22 | 46.57° | 11.40° | 3.04 | 27399 | 0 | 0 | 54722 |
| case4 | 100Δ | 10Δ | 10Δ | 0.125Δ | 80 | 0.85 | 0.18 | 46.40° | 10.02° | 3.41 | 32467 | 0 | 0 | 64853 |
| case4* | 100Δ | 10Δ | 10Δ | 0.125Δ | 80 | 0.76 | 0.23 | 41.15° | 8.49° | 12.69 | 32467 | 0 | 0 | 64853 |
| While $N$ denotes the total number of generated triangles, $N_p$, $N_s$ and $N_c$ denote the total quantity of particles involved in the mesh generation region, on the geometry surface and for the singularities, respectively. | | | | | | | | | | | | | | |

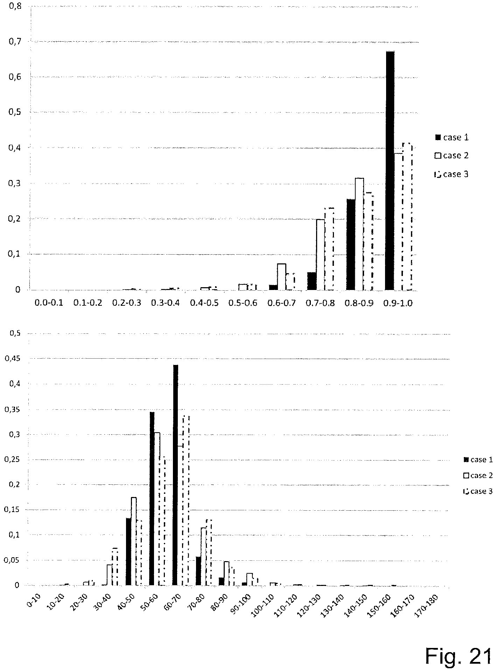

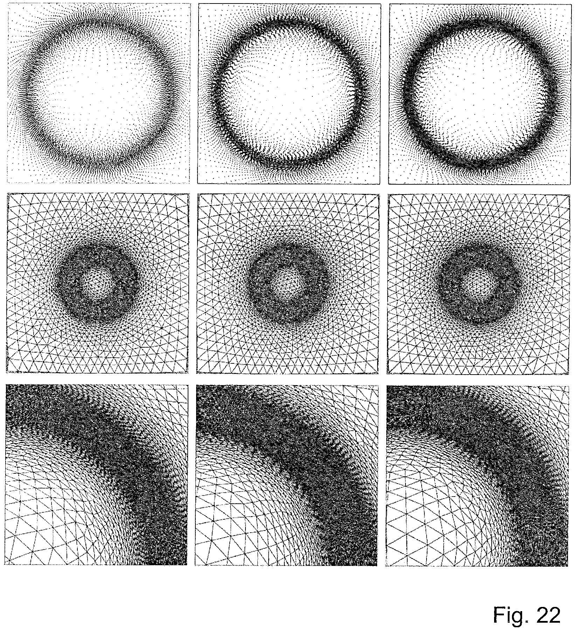

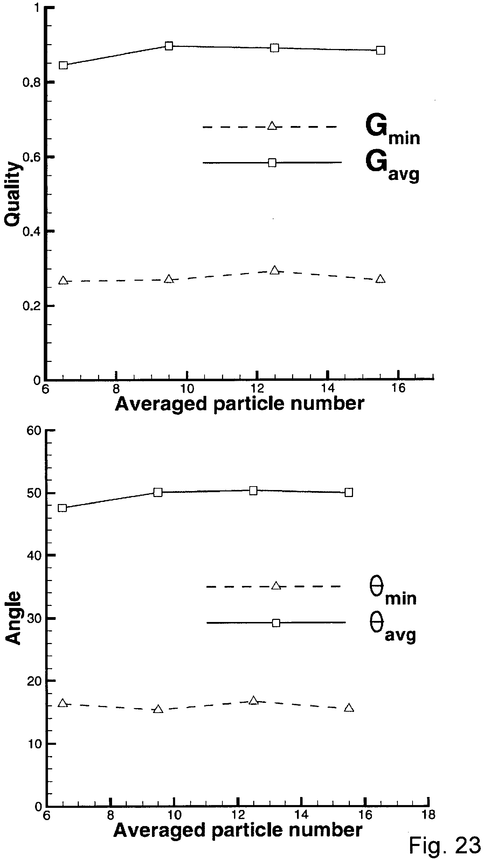

Fig. 21 gives the angle distribution and the quality distribution. Since the stretching ratio becomes larger than 20, both distributions deteriorate and remain on the similar level for the method. Meanwhile, the mesh quality degenerates if the mesh is further optimized by MMG2D. In Fig. 22, it is noticed that for larger stretching ratios, the larger proportion of the particles fail to reach the average particle number, indicating the larger error in achieving the target objective functions. This is the fundamental reason responsible for the degenerated mesh quality. As shown in Fig. 23, although the average criterion $G_{\mathrm{avg}}$ and $\theta_{\mathrm{avg}}$ are improved slightly along with the increase of the averaged neighbor particle number, overall speaking, the mesh quality is not sensitive to the variation. Considering that the computational costs increase linearly with the averaged neighbor particle number, a typical minimum value of 6.5 is adopted for all simulations.

In a next case, we consider two simple geometries, i.e. a circle and a square, to validate the boundary treatments. The computational domain is [0, 100] $\times$ [0, 100] in two dimensions and the background multi-resolution mesh is adapted in five levels with Δ = 0.390625 for circle geometry, Δ = 0.1953125 for square geometry. The initial parameter settings are given in Table 5 with a maximum stretching ratio 20 for the circle and 12 for the square close to the geometry surface. The maximum mesh adaptation is as large as 400 times for the circle geometry and 26.7 for the square geometry.

Table 5 - Initial condition and quality statistics for circle and square geometry

| | $h_{max}$ | $h_{max,t}$ | $h_{min,t}$ | $h_{min,n}$ | $K_a$ | $G_{avg}$ | $G_{min}$ | $\theta_{avg}$ | $\theta_{min}$ | %<30° | $N_p$ | $N_s$ | $N_c$ | $N$ |
|---|---|---|---|---|---|---|---|---|---|---|---|---|---|---|
| circle case1 | 40Δ | 2Δ | 2Δ | 0.4Δ | 50 | 0.93 | 0.55 | 54.25° | 28.83° | 0.02 | 2516 | 99 | 0 | 5079 |
| circle case2 | 40Δ | 2Δ | 2Δ | 0.2Δ | 50 | 0.93 | 0.50 | 53.26° | 27.25° | 0.026 | 3801 | 99 | 0 | 7649 |
| circle case3 | 40Δ | 2Δ | 2Δ | 0.1Δ | 50 | 0.92 | 0.48 | 52.47° | 28.47° | 0.017 | 5875 | 99 | 0 | 11794 |
| square case1 | 40Δ | 6Δ | 1.5Δ | 1.5Δ | 50 | 0.92 | 0.41 | 53.80° | 25.58° | 0.01 | 2920 | 128 | 4 | 5878 |
| square case2 | 40Δ | 12Δ | 1.5Δ | 1.5Δ | 50 | 0.92 | 0.46 | 53.45° | 27.72° | 0.067 | 2228 | 97 | 4 | 4469 |
| square case3 | 40Δ | 18Δ | 1.5Δ | 1.5Δ | 50 | 0.92 | 0.55 | 53.32° | 31.74° | 0.0 | 1802 | 80 | 4 | 3605 |

While $N$ denotes the total number of generated triangles, $N_p$, $N_s$ and $N_c$ denote the total quantity of particles involved in the mesh generation region, on the geometry surface and for the singularities, respectively.

As shown in Table 5, for all six simulations, the average quality measurement remains $G_{avg} \geq 0.92$ while $\theta_{avg} \geq 52.47°$, even the more critical criterion (circle case 3 and square cases) gives $G_{min} \geq 0.41$ and $\theta_{avg} \geq 52.47°$.

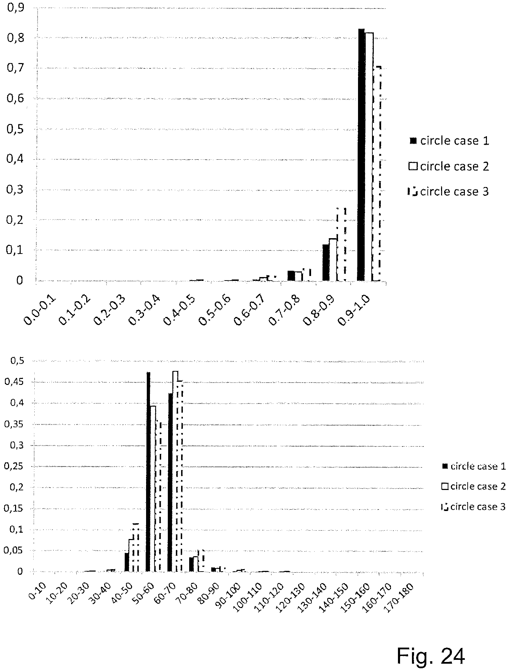

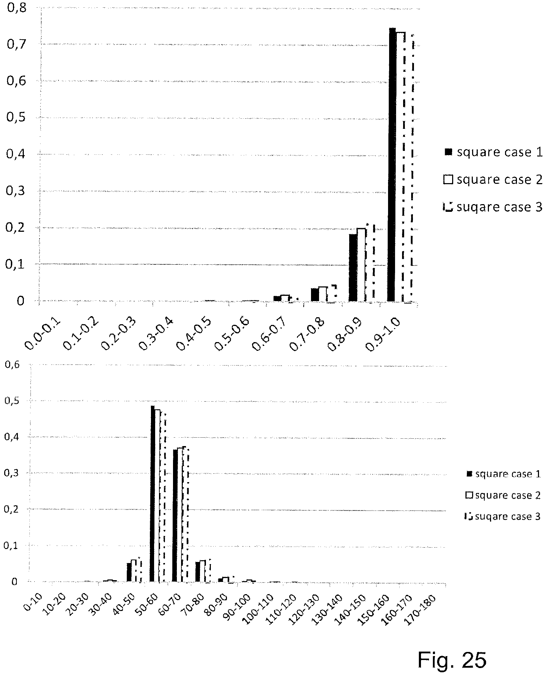

Moreover, the relatively low-quality triangles account for only a tiny proportion as the largest $\%_{<30°} \leq 0.067$. As demonstrated by the angle and the quality histograms in Figs. 24 and 25, approximate 85% of the triangle angles are around 60° and 70% ~ 82% of the triangles feature a quality criteria $0.9 \leq G \leq 1$. Moreover, the proportion of the low-quality triangles decreases exponentially.

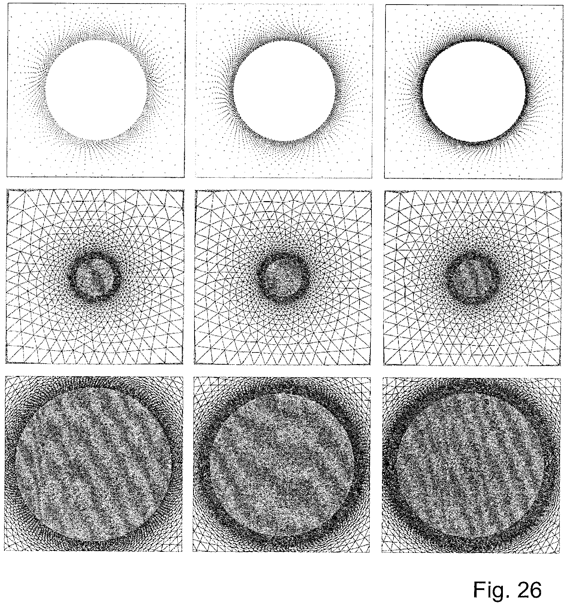

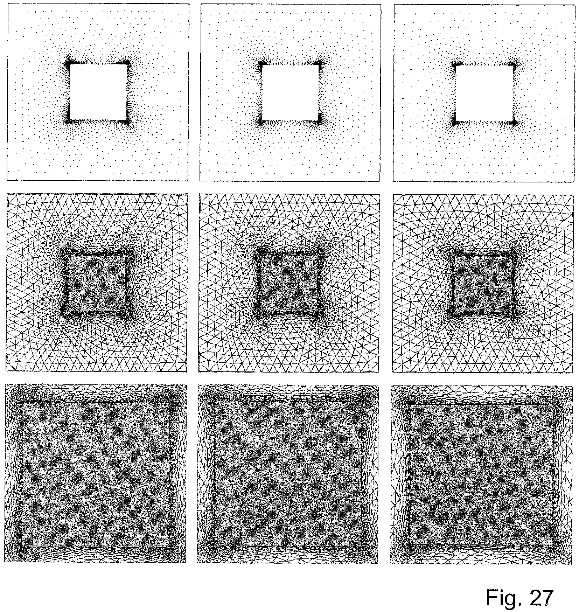

From Fig. 26, it is observed that the particle distribution is well regularized in the vicinity of the circle geometry surface and the corresponding mesh is virtually smooth in the whole domain. In most of the computational domain, for both the farfield isotropic region and the anisotropic region close to surface, the mesh quality is quite satisfactory. No significant quality degeneration can be found close to the boundary. The criterion $G_{area}$ is around 1 globally, implying that the triangle sizes are conforming to the objective density function defined by the metric tensor and the yielded mesh is highly smooth in the metric space. Although the maximum stretching ratio is 20 and a geometry surface is involved, this distribution is better than that from all prior art simulations with different energy-optimization based particle interaction force formulas. From Fig. 27, it can be observed that the square corners are well resolved in an isotropic manner while the square edges are adaptively captured by the anisotropic mesh. The two quality measurements demonstrate that the triangles are quite regular in the metric space; hence the ideal anisotropic mesh is generated by the method.

Following, three geometries of Zalesak's disk, circles and NACA0012 airfoil are considered. The computational domain is [0, 100] $\times$ [0, 100] in two dimensions and the background multi-resolution mesh is adapted in seven levels with $\Delta = 0.1953125$ for Zalesak's disk geometry and with $\Delta = 0.09765625$ for circles geometry. For the NACA0012 airfoil geometry, the computational domain is [0, 4] $\times$ [0, 4] with $\Delta = 0.00390625$. The initial conditions for the four simulations are set as indicated in Table 6.

Table 6 - Initial condition and quality statistics for Zalesak's disk, circles and NACA0012 airfoil geometry

| | $h_{max}$ | $h_{max,t}$ | $h_{min,t}$ | $h_{min,n}$ | $K_a$ | $G_{avg}$ | $G_{min}$ | $\theta_{avg}$ | $\theta_{min}$ | $\%_{<30°}$ | $N_p$ | $N_s$ | $N_c$ | $N$ |
|---|---|---|---|---|---|---|---|---|---|---|---|---|---|---|
| disk case1 | $40\Delta$ | $9\Delta$ | $1.5\Delta$ | $1.5\Delta$ | 50 | 0.93 | 0.58 | 54.79° | 34.91° | 0.0 | 4535 | 286 | 4 | 9256 |
| disk case2 | $40\Delta$ | $12\Delta$ | $1.5\Delta$ | $1.5\Delta$ | 50 | 0.93 | 0.61 | 54.51° | 31.51° | 0.0 | 3841 | 246 | 4 | 7832 |
| disk case3 | $40\Delta$ | $15\Delta$ | $1.5\Delta$ | $1.5\Delta$ | 50 | 0.93 | 0.46 | 54.61° | 25.64° | 0.10 | 3339 | 218 | 4 | 6801 |
| circles | $40\Delta$ | $10\Delta$ | $\Delta$ | $\Delta$ | 0.3 | 0.94 | 0.61 | 55.25° | 32.04° | 0 | 15640 | 560 | 8 | 31648 |
| NACA0012 airfoil | $60\Delta$ | $30\Delta$ | $\Delta$ | $\Delta$ | 20 | 0.93 | 0.49 | 54.55° | 26.21° | 0.04 | 4734 | 82 | 2 | 9441 |
| While $N$ denotes the total number of generated triangles, $N_p$, $N_s$ and $N_c$ denote the total quantity of particles involved in the mesh generation region, on the geometry surface and for the singularities, respectively. | | | | | | | | | | | | | | |

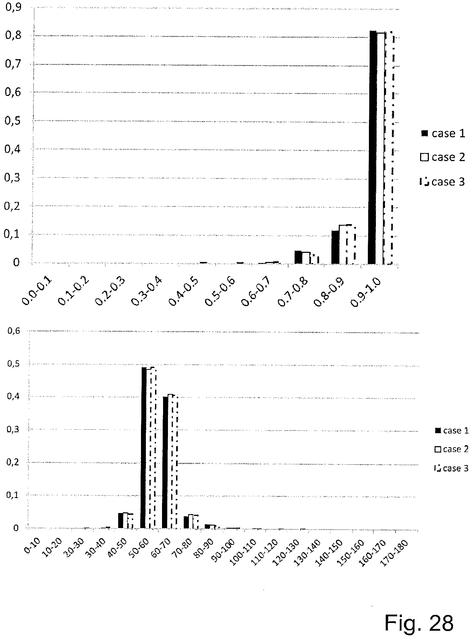

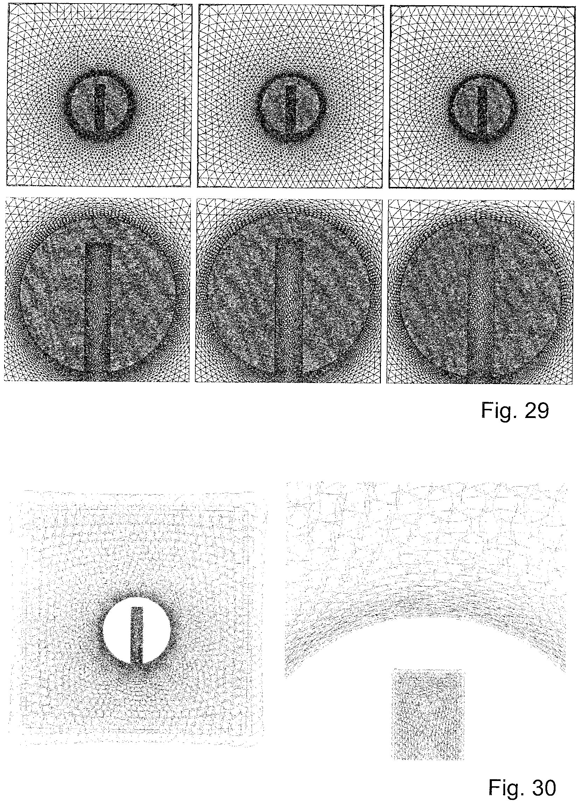

From Table 6, despite that slight degeneration of quality measurement $G_{min}$ and $\theta_{min}$ can be observed when the maximum stretching ratio increases, it is noted that all the measured criteria are quite optimal, particularly $G_{avg} \geq$ 0.93 and $\theta_{avg} \geq 54.51°$. This is also demonstrated by the angle and the quality histograms in Fig. 28. Almost 90% of the triangle angles are around 60° while more than 80% of the triangles possess a quality $G$ larger than 0.90. The generated mesh for Zalesak's disk is given in Fig. 29. We can tell that at least virtually the mesh is smooth throughout the domain. From the criteria $G$ and $G_{area}$, it is noticed that the final mesh retains a high quality close to the boundary and is uniformly smooth globally. Fig. 30 draws sketches of the particle smoothing-domain distribution after convergence. It can be observed that the particle smoothing-domains fulfill the meshing region and overlap with each other while their shapes, sizes and orientations vary smoothly. No remarkable changes can be distinguished between the particles on the geometry surface and those in the region close to the boundary. Therefore, the proposed ghost surface particle method and the corresponding particle interaction strategy are efficient and robust.

Summary of embodiment 3:

For this embodiment, the unstructured mesh generation method based on SPH simulation is further generalized to anisotropic meshing. The major contributions are concluded as follows:

The anisotropic target feature-size function and the density function, taking into account the effects of geometry surface curvature and singularities on mesh adaptation, based on the level-set method is given in detail.

An ASPH particle method with an ellipsoid smoothing kernel and a tensor smoothing length is introduced to optimize the particle position respecting the target feature-size function and the density function. The fine-grained physics-driven model makes it straightforward to determine the total particle quantity to fill the computational domain. The complex dynamic particle population control is hence avoided, enabling it exceptionally superior over other particle-based approaches. The tailored equation of state incorporating the target density function eliminates the direct density computing with large numerical errors and remarkably enhances the numerical stability in combination with the kernel featuring non-negative second-order derivative. Other numerical algorithms are modified to adapt to the anisotropic property.
A ghost surface particle method is proposed to fix the particle penetration from the meshing region into the opposite phase. The particle interaction strategy is devised so that high-quality mesh elements with large stretching ratio can be guaranteed in the neighborhood of the geometry surface.
Several benchmark cases are assessed and the numerical results show that the proposed numerical strategy and the boundary treatment are efficient. A globally-smooth high-quality anisotropic mesh conforming to the objective functions can be generated. Due to the consistent particle population estimate beforehand, a particle population control during the simulation is not necessary and the performance is therefore definite with specific user-defined global parameters. Besides that, the present method can also be straightforwardly extended to three-dimensional cases and employed as a global mesh optimization tool for others. A drawback may be that it is much more time-consuming compared with other Delaunay-kernel based methods. Since the main numerical strategies of the method are based on PDE implicitly rather than on geometric operators explicitly, it is particularly useful for complex-geometry meshing.
The features disclosed in the specification, the claims and the figures can be relevant for the implementation of embodiments either individually or in any combination with each other.

**Claims**

1.  A method for generating a mesh, wherein the method is performed by a processor of a computing device and comprises steps of:

    - receiving a model,
    - constructing a function representing geometric properties of the model,
    - determining a total number of particles to be distributed on the model,
    - distributing the particles on the model until the particles reach a final position, wherein constraints provided by the function are taken into account when distributing the particles, and
    - triangulating the particles in the final position for generating an unstructured mesh.

2.  The method of claim 1, wherein the particles are distributed according to particle hydrodynamics.

3.  The method of claim 1 or 2, wherein the final position of the particles is an equilibrium position which is defined by an equation of state for the particles.

4. The method of one of the preceding claims, further comprising receiving user input before the step of constructing the function, wherein the user input comprises parameters defining a quality of the mesh.

5. The method of claim 4, wherein the user input comprises a minimum mesh size, an average mesh size, a minimum angle of angles of the triangles forming the mesh, an average of the minimum angles, a percentage of triangles having a minimum angle smaller than 30°, and / or an area quality criterion.

6. The method of one of the preceding claims, wherein the geometric properties comprise a surface of the model, corners of the model, edges of the model and / or an interior volume of the model.

7. The method of one of the preceding claims, wherein the function is a field function which provides an implicit representation of the geometric properties of the model.

8. The method of one of the preceding claims, wherein the total number of particles is determined by an integration of the function.

9. The method of one of the preceding claims, further comprising generating ghost particles, wherein the particles are distributed taking interactions of the particles with the ghost particles into account.

10. The method of one of the preceding claims, wherein the generated mesh is an isotropic mesh.

11. The method of one of the claims 1 to 9, wherein the generated mesh is an anisotropic mesh.

12. A system for generating a mesh, comprising a processor, wherein the processor is configured to:

- receive a model,
- construct a function representing geometric properties of the model,
- determine a total number of particles to be distributed on the model,
- distribute the particles on the model until the particles reach a final position, wherein constraints provided by the function are taken into account when distributing the particles, and
- triangulate the particles in the final position for generating an unstructured mesh.

30

Transfer the geometric and other features of interest of the model into an implicit representation by field functions — 31

Determine the total number of particles which will be distributed in volumetric domains, surfaces and edges — 32

Distribute particles on the singularities and within volumetric domains under the constraints field — 33

Triangulate the particles into connected surface or volumetric mesh elements — 34

Fig. 1

Fig. 2

50

| Sample spike, edge and surface particles, surface ghost particles, if necessary | 51 |

| Run SPH simulation to obtain converged distribution on the singularities | 52 |

| Sample volumetric particles | 53 |

| Run SPH simulation to obtain converged distribution in volumetric domains | 54 |

Fig. 3

Fig. 4

$$\mathcal{C}_s \qquad \Gamma$$

$$\blacksquare \; \Omega_b$$

$$\Gamma_{b1} \qquad 2\,\text{cells}$$

$$\Gamma_{b2}$$

$\Gamma$

■ Cut cells $\mathcal{C}$

□ Extension cells $\mathcal{C}_e$ belongs to $\Omega_b$

○ Characteristic cells $\mathcal{C}_s$

Fig. 5

| | |
|---|---|
| ▨ | Cut cells $\mathcal{C}$ |
| ○ | Sampled surface particles |
| △ | Remapped surface particles |

| | |
|---|---|
| ○ | Ghost particles |
| △ | Boundary particles |
| □ | Neighbor particles |
| ☆ | Positive-phase particles |
| ○ | Surface particles |

Symmetric boundary condition

provide boundary condition
for positive-phase particles

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Europäisches
Patentamt

European
Patent Office

Office européen
des brevets

## EUROPEAN SEARCH REPORT

Application Number

EP 16 17 3542

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUANFENG ZHOU ET AL: "Triangulation of Implicit Surfaces Based on Particle System", COMPUTER AND INFORMATION TECHNOLOGY, 2008. CIT 2008. 8TH IEEE INTERNATIONAL CONFERENCE ON, IEEE, PISCATAWAY, NJ, USA, 8 July 2008 (2008-07-08), pages 12-17, XP031302589, ISBN: 978-1-4244-2357-6 * sections 2 and 3 * | 1-12 | INV. G06T17/20 G06F17/50 |
| X | SHENGJUN LIU ET AL: "High Quality Triangulation of Implicit Surfaces", COMPUTER AIDED DESIGN AND COMPUTER GRAPHICS, 2005. NINTH INTERNATIONAL CONFERENCE ON HONG KONG, CHINA 07-10 DEC. 2005, PISCATAWAY, NJ, USA,IEEE, 7 December 2005 (2005-12-07), pages 133-138, XP010900908, DOI: 10.1109/CAD-CG.2005.46 ISBN: 978-0-7695-2473-3 * sections 2 and 3 * | 1-12 | |
| X | DE FIGUEIREDO L H ET AL: "Physically-based methods for polygonization of implicit surfaces", PROCEEDINGS. GRAPHICS INTERFACE '92 CANADIAN INF. PROCESS. SOC. TORONTO, ONT., CANADA, 1992, pages 250-257, XP055328668, ISBN: 0-9695338-1-0 * the whole document * | 1-12 | TECHNICAL FIELDS SEARCHED (IPC) G06T G06F |

The present search report has been drawn up for all claims

| Place of search | Date of completion of the search | Examiner |
|---|---|---|
| Berlin | 13 December 2016 | Bouchaâla, Nicolas |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8970590 B1